# EUROPEAN PATENT APPLICATION

(11) **EP 4 564 320 A1**
(43) Date of publication of application: **04.06.2025**
(21) Application number: 23910871.5
(22) Date of filing: 28.12.2023
(51) Int. Cl.: G06V 40/13

(54) **FINGERPRINT INPUT METHOD AND RELATED APPARATUS**

(30) Priority: 30.12.2022 CN 202211730951
(71) Applicant: Huawei Technologies Co., Ltd., Shenzhen, Guangdong 518129 (CN)
(72) Inventor: DENG, Kaifeng, Shenzhen, Guangdong 518129 (CN); ZHANG, Li, Shenzhen, Guangdong 518129 (CN); CAI, Qi, Shenzhen, Guangdong 518129 (CN); LENG, Xuntai, Shenzhen, Guangdong 518129 (CN); WANG, Saisai, Shenzhen, Guangdong 518129 (CN); LUO, Yibin, Shenzhen, Guangdong 518129 (CN); CAI, Xiaoge, Shenzhen, Guangdong 518129 (CN)
(74) Representative: Pfenning, Meinig & Partner mbB
(86) International application number: PCT/CN2023/142935
(87) International publication number: WO 2024/140957

(57) **Abstract**

This application discloses a fingerprint enrollment method and a related apparatus. When an electronic device enables a fingerprint enrollment mode, and detects an input (a touch operation or a friction sliding operation) of a user for a fingerprint collection region, the electronic device may collect fingerprint information of the user, and determine an enrolled region based on the collected fingerprint information. If an area of the enrolled region is less than a preset value, the electronic device outputs an enrollment prompt, where the enrollment prompt is used to prompt the user of fingerprint information to be input in a next step. If the area of the enrolled region is greater than the preset value, the electronic device outputs a completion prompt, where the completion prompt is used to prompt the user that fingerprint enrollment is completed. In this way, fingerprint enrollment efficiency can be improved.

## Description

This application claims priority to Chinese Patent Application No. 202211730951.5, filed with the China National Intellectual Property Administration on December 30, 2022 and entitled "FINGERPRINT ENROLLMENT METHOD AND RELATED APPARATUS", which is incorporated herein by reference in its entirety.

### TECHNICAL FIELD

This application relates to the field of terminal technologies, and in particular, to a fingerprint enrollment method and a related apparatus.

### BACKGROUND

With continuous development of terminal technologies, to ensure device security, more electronic devices use biological information such as fingerprints as a means of identifying users. Before the electronic devices use the fingerprints to identity the users, the electronic devices need to enroll fingerprint information of the users.

When detecting that a finger of a user touches a fingerprint collection region, an electronic device may collect a part of a fingerprint of the finger of the user. The electronic device may obtain all the fingerprint of the finger of the user by collecting the fingerprint for a plurality of times. In a fingerprint enrollment process, the electronic device may play a preset animation on a display, where the animation may be used to prompt the user of a fingerprint enrollment progress. In addition, when fingerprint images collected by the electronic device for two consecutive times are the same, the electronic device may display a prompt on the display, to prompt the user to move the finger, and collect a fingerprint of another region of the finger.

However, when the fingerprint is enrolled in the foregoing manner, fingerprint enrollment steps are cumbersome.

### SUMMARY

This application provides a fingerprint enrollment method and a related apparatus, so that an enrollment prompt is output in real time based on collected fingerprint information in a fingerprint enrollment process, to prompt a user of fingerprint information to be enrolled in a next step, and fingerprint enrollment efficiency is improved.

According to a first aspect, this application provides a fingerprint enrollment method. The method includes: An electronic device receives first fingerprint information of a user. The electronic device determines a first enrollment region based on the first fingerprint information, where the first enrollment region includes a region corresponding to the first fingerprint information. The electronic device outputs a first enrollment prompt based on the first enrollment region, where the first enrollment prompt is used to prompt the user to input second fingerprint information. The electronic device receives the second fingerprint information of the user. The electronic device determines a second enrollment region based on the second fingerprint information, where the second enrollment region includes the first enrollment region and a region corresponding to the second fingerprint information. The electronic device outputs a second enrollment prompt based on the second enrollment region, where the second enrollment prompt is used to prompt the user to input third fingerprint information. The first fingerprint information is different from the second fingerprint information, and the first enrollment prompt is different from the second enrollment prompt.

In this way, an enrolled region may be determined in real time based on collected fingerprint information, to output an enrollment prompt based on the enrolled region, and prompt the user of fingerprint information to be enrolled in a next step. According to the foregoing method, fingerprint enrollment efficiency can be improved.

In a possible implementation, that the electronic device outputs a first enrollment prompt based on the first enrollment region specifically includes: when the electronic device determines that an area of the first enrollment region is less than a preset value, the electronic device outputs the first enrollment prompt; and that the electronic device outputs a second enrollment prompt based on the second enrollment region specifically includes: when the electronic device determines that the area of the first enrollment region is less than the preset value, the electronic device outputs the second enrollment prompt.

In this way, when determining that an area of the enrolled region is less than the preset value, the electronic device may determine that fingerprint enrollment is not completed, and then output the enrollment prompt based on the enrolled region.

In a possible implementation, the method further includes: The electronic device receives the third fingerprint information of the user. The electronic device determines a third enrollment region based on the third fingerprint information, where the third enrollment region includes the second enrollment region and a region corresponding to the third fingerprint information. When the electronic device determines that an area of the third enrollment region is greater than the preset value, the electronic device outputs a completion prompt, where the completion prompt is used to prompt the user that fingerprint enrollment is completed. The third fingerprint information is different from the first fingerprint information, and is different from the second fingerprint information.

In this way, when determining that the area of the enrolled region is greater than the preset value, the electronic device may determine that fingerprint enrollment is completed. In this case, the electronic device may output a completion prompt, to prompt the user that fingerprint enrollment is completed.

In a possible implementation, that an electronic device receives first fingerprint information of a user specifically includes: The electronic device receives a touch operation of a finger of the user for a fingerprint collection region on the electronic device, and the electronic device collects the first fingerprint information of the user in response to the touch operation.

In a possible implementation, that an electronic device receives first fingerprint information of a user specifically includes: The electronic device receives a friction sliding operation of a finger of the user for a fingerprint collection region, and the electronic device collects the first fingerprint information of the user in response to the friction sliding operation.

In this way, regardless of whether the operation of the finger of the user for the fingerprint collection region is the touch operation or the friction sliding operation, the electronic device may collect the fingerprint information of the user in response to the operation of the user for the fingerprint collection region.

In a possible implementation, the fingerprint collection region is a side fingerprint button or an under-screen fingerprint collection region.

In a possible implementation, the first enrollment prompt includes a first fingerprint image drawn by the electronic device based on the first fingerprint information.

The first fingerprint image drawn by the electronic device based on the first fingerprint information may be a fingerprint image collected by the electronic device. In this way, the user may determine, by using the first fingerprint image output by the electronic device, a region corresponding to a collected fingerprint, and then determine a missing fingerprint region, to determine fingerprint information to be enrolled in a next step.

In a possible implementation, the first enrollment prompt includes the first enrollment region.

The user may determine the missing fingerprint region based on the enrolled region (for example, the first enrollment region) output by the electronic device, to determine the fingerprint information that needs to be enrolled in the next step.

In a possible implementation, the first enrollment prompt includes a movement direction of the finger relative to the fingerprint collection region, and the movement direction is used to guide the user to input the second fingerprint information.

The electronic device may also prompt, by outputting the movement direction of the finger, the user of the fingerprint information to be enrolled in the next step.

According to a second aspect, this application provides an electronic device. The electronic device includes one or more processors and one or more memories. The one or more memories are coupled to the one or more processors. The one or more memories are configured to store computer program code, and the computer program code includes computer instructions. When the one or more processors execute the computer instructions, the electronic device is enabled to perform the fingerprint enrollment method according to any possible implementation of any one of the foregoing aspects.

According to a third aspect, an embodiment of this application provides a computer storage medium. The computer storage medium includes computer instructions. When the computer instructions are run on an electronic device, the electronic device is enabled to perform the fingerprint enrollment method according to any possible implementation of any one of the foregoing aspects.

According to a fourth aspect, an embodiment of this application provides a computer program product. When the computer program product is run on a computer, the computer is enabled to perform the fingerprint enrollment method according to any possible implementation of any one of the foregoing aspects.

For beneficial effect of the second aspect to the fourth aspect, refer to the beneficial effect of the first aspect.

### BRIEF DESCRIPTION OF DRAWINGS

FIG. 1 is a diagram of a hardware structure of an electronic device 10 according to an embodiment of this application;
FIG. 2A to FIG. 2J are diagrams of an interface on which an electronic device 10 outputs an enrollment prompt in a fingerprint enrollment process according to an embodiment of this application;
FIG. 3A to FIG. 3D are diagrams of another interface on which an electronic device 10 outputs an enrollment prompt in a fingerprint enrollment process according to an embodiment of this application;
FIG. 4 is a diagram of another interface on which an electronic device 10 outputs an enrollment prompt in a fingerprint enrollment process according to an embodiment of this application;
FIG. 5 is a diagram of an interface on which an electronic device 10 outputs an enrollment guidance animation according to an embodiment of this application;
FIG. 6 is a schematic flowchart of a fingerprint enrollment method according to an embodiment of this application;
FIG. 7 is a schematic flowchart of determining an enrolled region by an electronic device 10 based on a collected fingerprint according to an embodiment of this application;
FIG. 8A and FIG. 8B are a schematic flowchart of a friction sliding fingerprint enrollment manner according to an embodiment of this application;
FIG. 9 is an interaction diagram of software modules in a process of performing a fingerprint enrollment method by an electronic device 10 according to an embodiment of this application; and
FIG. 10 is a diagram of a functional module of an electronic device 10 according to an embodiment of this application.

### DESCRIPTION OF EMBODIMENTS

The following clearly and completely describes technical solutions in embodiments of this application with reference to accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed on a display of the electronic device.

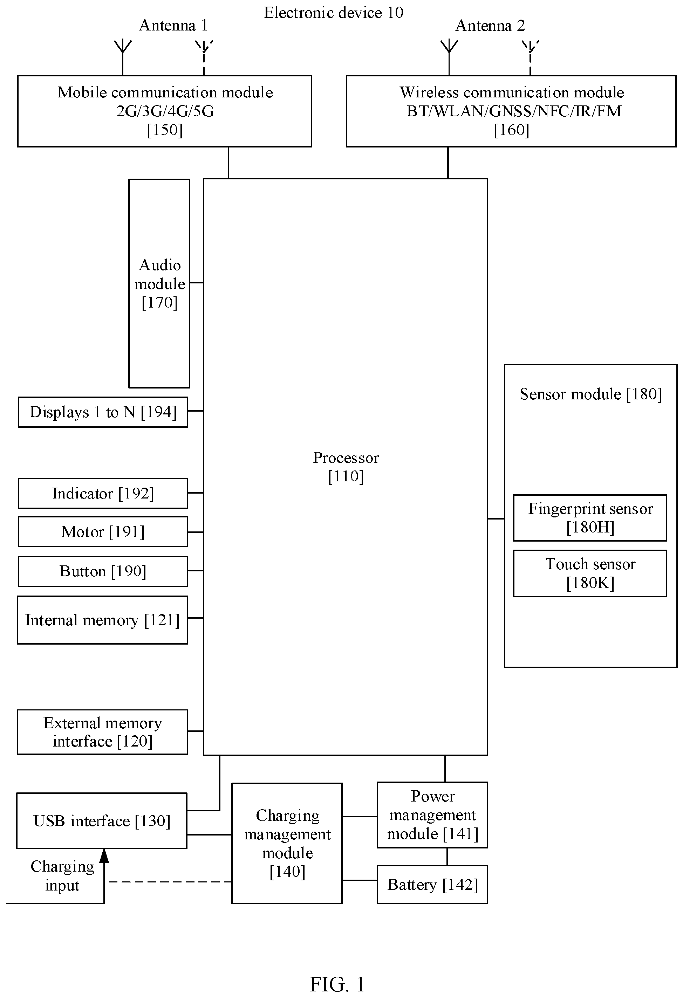

FIG. 1 is a diagram of a structure of an electronic device 10.

The electronic device 10 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 10 may include a processor 110, an internal memory 121, a charging management module 140, a power management module 141, a battery 142, a display 194, and a sensor module 180. The sensor module 180 may include a fingerprint sensor 180H, a touch sensor 180K, and the like. In some embodiments, the electronic device 10 may further include any one or more of the following components: an external memory interface 120, a universal serial bus (universal serial bus, USB) interface 130, an antenna 1, an antenna 2, a mobile communication module 150, a wireless communication module 160, an audio module 170, a button 190, a motor 191, an indicator 192, and the like.

It may be understood that the structure shown in embodiments of the present invention does not constitute a specific limitation on the electronic device 10. In some other embodiments of this application, the electronic device 10 may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have/has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the wireless communication module 160, and the like.

In some embodiments, the electronic device 10 may further have a wireless communication function. The wireless communication function of the electronic device 10 may be implemented through the antenna 1, the antenna 2, the mobile communication module 150, the wireless communication module 160, the modem processor, the baseband processor, and the like.

The electronic device 10 implements a display function through the GPU, the display 194, the application processor, and the like. The GPU is a microprocessor for image processing, and is connected to the display 194 and the application processor. The GPU is configured to perform mathematical and geometric computation for graphic rendering. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 10 may include one or N displays 194, where N is a positive integer greater than 1.

The internal memory 121 may include one or more random access memories (random access memories, RAMs) and one or more non-volatile memories (non-volatile memories, NVMs).

The random access memory may be directly read and written by the processor 110. The random access memory may be configured to store an executable program (for example, machine instructions) in an operating system or another running program, and may be further configured to store data of a user, data of an application, and the like.

The non-volatile memory may also store the executable program, the data of the user, data of the application, and the like, and may be loaded into the random access memory in advance for directly reading and writing by the processor 110.

The external memory interface 120 may be configured to be connected to an external non-volatile memory, to extend a storage capability of the electronic device 10. The external non-volatile memory communicates with the processor 110 through the external memory interface 120, to implement a data storage function. For example, files such as music and videos are stored in the external non-volatile memory.

The audio module 170 may include a speaker, a receiver, a microphone, a headset jack, an application processor, and the like. The electronic device 10 may implement an audio function through the audio module 170. In some embodiments of this application, the audio module 170 may be configured to output an enrollment prompt, a repeat prompt, a completion prompt, or the like.

In the sensor module 180, the fingerprint sensor 180H is configured to collect a fingerprint. The electronic device 10 may implement fingerprint-based unlocking, application access locking, fingerprint-based photographing, fingerprint-based call answering, and the like by using a feature of the collected fingerprint.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the electronic device 10 at a position different from that of the display 194. In embodiments of this application, the touch sensor 180K may also be configured to detect whether a finger of a user leaves a fingerprint collection region.

In some embodiments, the electronic device 10 may further include any one or more of the following: the button 190, the motor 191, and the indicator 192. The button 190 includes a power button, a fingerprint button, a volume button, and the like. The button 190 may be a mechanical button, or may be a touch button. The electronic device 10 may receive a button input, and generate a button signal input related to user settings and function control of the electronic device 10. The motor 191 may generate a vibration prompt. The motor 191 may be configured to provide a touch vibration feedback. In embodiments of this application, the motor 191 may also be configured to feed back fingerprint enrollment. The indicator 192 may be an indicator light. In some embodiments, the indicator 192 may be configured to indicate a fingerprint enrollment status notification and the like.

Embodiments of this application provide a fingerprint enrollment manner.

When an electronic device 10 is in a fingerprint enrollment mode (for example, a fingerprint enrollment interface is displayed), the electronic device 10 may detect a touch operation of a user for a fingerprint collection region. In response to the touch operation, the electronic device 10 may collect a fingerprint of a part of regions of a finger of the user through the fingerprint collection region, and send the fingerprint to a fingerprint algorithm. A determining algorithm determines a determining result of the fingerprint, and the determining result indicates whether the currently collected fingerprint is repeated (that is, whether a similarity value between the fingerprint and any previously collected fingerprint reaches a preset value). After determining the determining result, the algorithm may send the determining result to a hardware abstraction layer (hardware abstraction layer, Hal). After receiving the determining result, the Hal layer may send the determining result to a framework (framework) layer. If the framework layer determines, based on the determining result, that the currently collected fingerprint is not repeated, the framework layer may send an instruction 1 to a user interface (user interface, UI), where the instruction 1 instructs the UI to play a 1^{st} frame of image in a plurality of frames of images that are not displayed in a preset enrollment progress animation. If the framework layer determines, based on the determining result, that the currently collected fingerprint is repeated, the framework layer may send an instruction 2 to the UI, where the instruction 2 instructs the UI to output a repeat prompt, and the repeat prompt is used to prompt the user that the currently collected fingerprint is repeated with a previously collected fingerprint.

In the foregoing fingerprint enrollment manner, the electronic device 10 may enroll the fingerprint of the user, and in a subsequent process of using the electronic device 10 by the user, a function such as unlocking is implemented based on the enrolled fingerprint. However, when the fingerprint is enrolled in the foregoing fingerprint enrollment manner, the electronic device 10 usually needs to collect the fingerprint for a plurality of times (about 20 times or even more), to complete fingerprint enrollment. Consequently, steps are cumbersome, and efficiency is low.

Embodiments of this application provide a fingerprint enrollment method.

When an electronic device 10 is in a fingerprint enrollment mode (for example, a fingerprint enrollment interface is displayed), the electronic device 10 may detect an input (for example, a touch operation or a friction sliding operation) of a user for a fingerprint collection region. In response to the input of the user for the fingerprint collection region, the electronic device 10 may collect fingerprint information (which is also referred to as a fingerprint in this application) of a finger of the user through the fingerprint collection region, and send one or more fingerprints to a fingerprint algorithm. The fingerprint algorithm may determine an enrolled region of the finger of the user based on the collected fingerprint, and determine whether the enrolled region meets a preset condition (for example, an area of the enrolled region reaches a preset value, there is no missing region, or a quantity of collected fingerprints is greater than a preset quantity). If the algorithm determines that the enrolled region does not meet the preset condition, the fingerprint algorithm may send the enrolled region to a Hal layer, the Hal layer sends the enrolled region to a framework layer, and then the framework layer sends the enrolled region to a UI. The UI may determine, based on the enrolled region, to output an enrollment prompt, where the enrollment prompt includes a missing region prompt and/or a movement direction prompt. If the algorithm determines that the enrolled region meets the preset condition, the algorithm may send a completion instruction to the UI through the Hal layer and the framework layer, where the completion instruction instructs the UI to output a completion prompt, and the completion prompt is used to prompt the user that fingerprint enrollment is completed.

In some embodiments, the fingerprint algorithm may also determine a determining result of the fingerprint, where the determining result indicates whether the fingerprint is repeated (that is, whether a similarity value between the fingerprint and any previously collected fingerprint reaches a preset similarity value). If the fingerprint algorithm determines that the currently collected fingerprint is repeated, the algorithm may send a current determining result to the UI through the Hal layer and the framework layer. After receiving the determining result indicating that the currently collected fingerprint is repeated, the UI may output a repeat prompt, where the repeat prompt is used to prompt the user that the currently collected fingerprint is repeated with a previously collected fingerprint.

With reference to application scenarios, the following specifically describes a fingerprint enrollment method provided in embodiments of this application.

In some application scenarios, when an electronic device 10 displays a fingerprint enrollment interface, the electronic device 10 may detect a touch operation of a finger of a user for a fingerprint collection region. In response to the touch operation, the electronic device 10 may collect fingerprint information of the finger of the user (namely, a fingerprint of a contact region between the finger and the fingerprint collection region), and output an enrollment prompt or output a completion prompt based on the collected fingerprint. The completion prompt is used to prompt the user that fingerprint enrollment is completed. The enrollment prompt may include an enrolled region prompt (or a missing region prompt) and/or a movement direction prompt. The enrolled region prompt may be used to prompt the user of an enrolled fingerprint region. The movement direction prompt may be used to prompt the user of a movement direction of the finger in a next step. The enrolled region prompt (or the missing region prompt) may include one or more fingerprints collected by the electronic device 10.

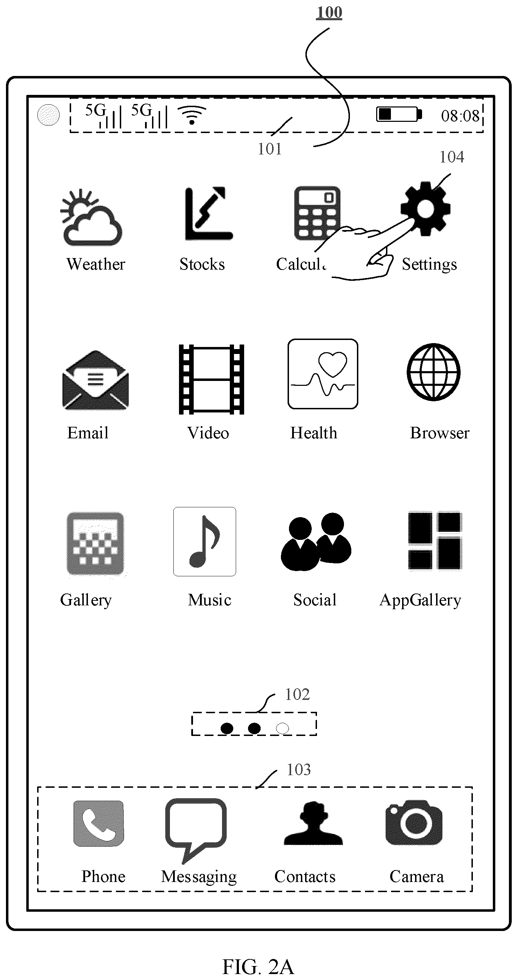

With reference to FIG. 2A to FIG. 2J, the following describes a fingerprint enrollment manner provided in embodiments of this application.

As shown in FIG. 2A, an electronic device 10 may display a home screen 100, the home screen 100 displays a page on which an application icon is placed, and the page includes a plurality of application icons (for example, a "Weather" application icon, a "Settings" application icon 104, an "Email" application icon, a "Music" application icon, and a "Gallery" application icon). In some embodiments, a page indicator 102 is further displayed below the page on which an application icon is placed, to indicate a total quantity of pages on the home screen and a position relationship between a currently displayed page and another page. For example, the home screen 100 may include three pages, and a white dot in the page indicator is located at a 3^{rd} position from left, and may indicate that the currently displayed page is a 3^{rd} page from left of the three pages. In some embodiments, a status bar 101 is further displayed above the page on which an application icon is placed, and the status bar 101 may include a strength indicator of a communication signal, a battery level value, time, and other information. Further, in some embodiments, there may be a dock (dock) region 103 below the page indicator, the dock region 103 may include one or more dock icons (for example, a "Phone" application icon, a "Messaging" application icon, a "Contacts" application icon, and a "Camera" application icon), and the one or more dock icons in the dock region may remain displayed during page switching.

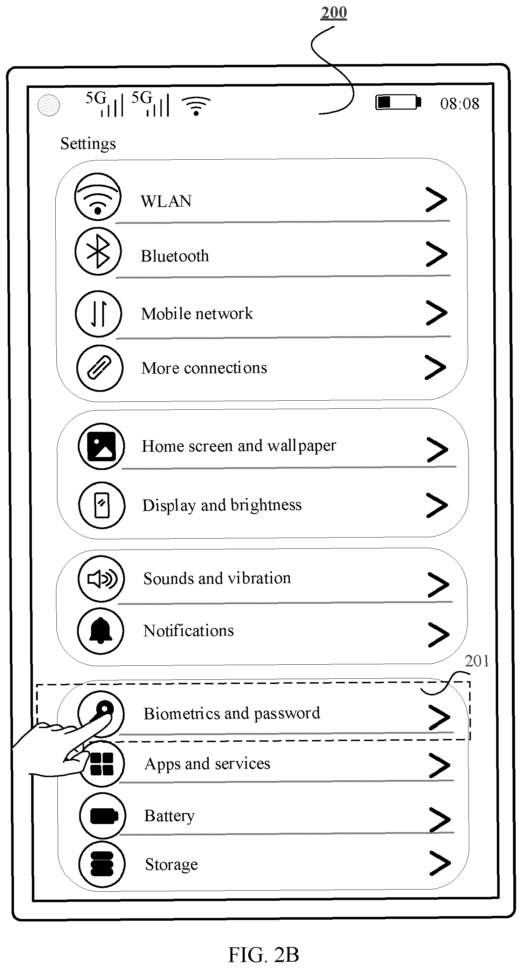

The electronic device 10 may receive and respond to an input (for example, a tap operation) of a user on the "Settings" application icon 104, and display a setting main interface 200 shown in FIG. 2B.

As shown in FIG. 2B, the setting main interface 200 may include one or more setting entries (for example, a "WLAN" setting entry, a "Bluetooth" setting entry, a Mobile network setting entry, a "More connections" setting entry, a "Home screen and wallpaper" setting entry, a "Display and brightness" setting entry, a "Sounds and vibration" setting entry, a "Notifications" setting entry, a "Biometrics and password" setting entry 201, an "Apps and services" setting entry, a "Battery" setting entry, and a "Storage" setting entry). The setting entry may be used to trigger the electronic device 10 to display a setting interface corresponding to the setting entry.

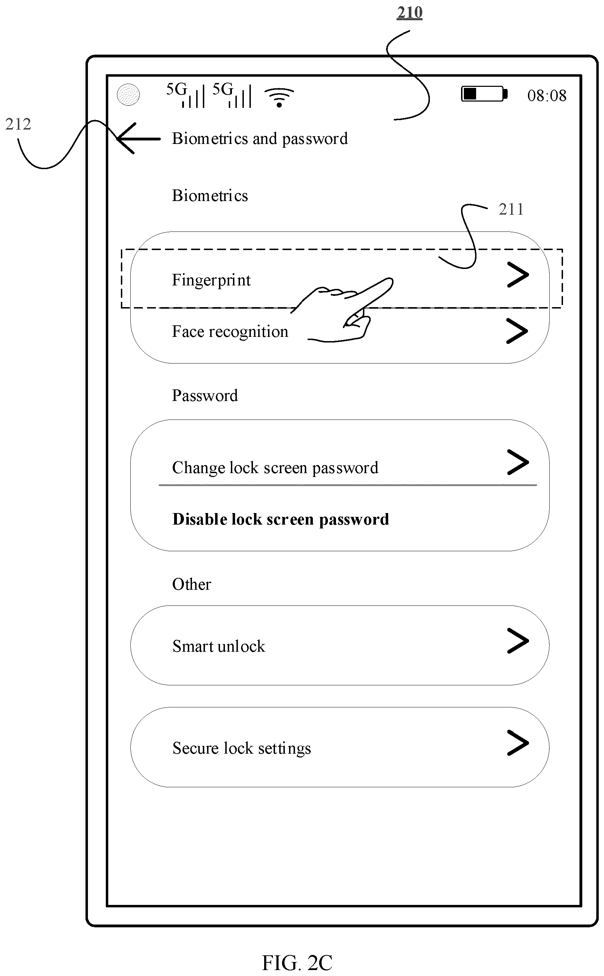

The electronic device 10 may receive and respond to an input (for example, a tap operation) of the user on the "Biometrics and password" setting entry 201, and display a biometrics and password setting interface 210 shown in FIG. 2C.

As shown in FIG. 2C, the biometrics and password setting interface 210 may include one or more setting entries related to "Biometrics and password", for example, a "Fingerprint" setting entry 211, a "Face recognition" setting entry, a "Change lock screen password" setting entry, a "Disable lock screen password" setting entry, a "Smart unlock" setting entry, and a "Secure lock settings" setting entry. The setting entry may be used to trigger the electronic device 10 to display a setting interface corresponding to the setting entry, or may be used to trigger the electronic device 10 to display, on the biometrics and password setting interface 210, a setting window corresponding to the setting entry, where the setting window may include prompt information and one or more setting controls.

In some embodiments, the biometrics and password setting interface 210 further includes a return control 212, and the return control 212 may be configured to trigger the electronic device 10 to display the setting main interface 200 shown in FIG. 2B. In some embodiments, the electronic device 10 may also display the setting main interface 200 shown in FIG. 2B in response to a return operation (for example, a right sliding operation) of the user.

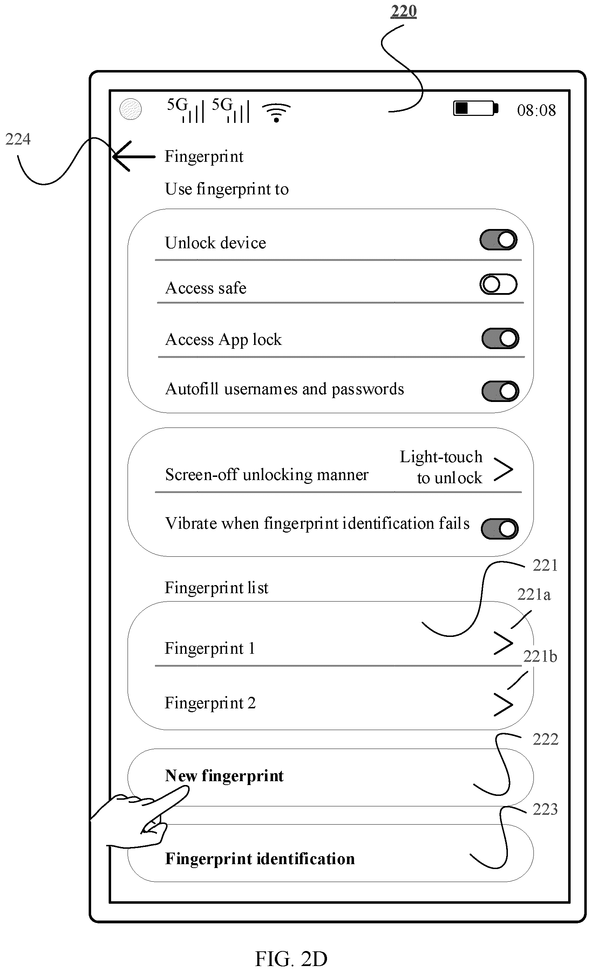

The electronic device 10 may receive and respond to an input (for example, a tap operation) of the user on the "Fingerprint" setting entry 211, and display a fingerprint setting interface 220 shown in FIG. 2D.

As shown in FIG. 2D, the fingerprint setting interface 220 may include one or more setting controls used to set fingerprint purposes, a fingerprint list 221, a "New fingerprint" control 222, and a "Fingerprint identification" control 223. The one or more setting controls used to set fingerprint purposes may include any one or more of the following: an "Unlock device" setting control, an "Access safe" setting control, an "Access App lock" setting control, an "Autofill usernames and passwords" setting control, a "Screen-off unlocking manner" setting control, and a "Vibrate when fingerprint identification fails" setting control.

The fingerprint list 221 may include one or more enrolled fingerprint entries, for example, a fingerprint entry 221a and a fingerprint entry 221b. A fingerprint name corresponding to the fingerprint entry 221a is a fingerprint 1, and a fingerprint name corresponding to the fingerprint entry 221b is a fingerprint 2. The fingerprint entry 221a may be used to trigger the electronic device 10 to display a setting window of the fingerprint 1 on the fingerprint setting interface 220. The electronic device 10 may change a name of the fingerprint 1 or delete the fingerprint 1 in response to an input of the user on the setting window. For a purpose of the fingerprint entry 221b, refer to related descriptions of the purpose of the fingerprint entry 221a. In some embodiments, for example, when no fingerprint is enrolled or all enrolled fingerprints are deleted, the fingerprint list 221 may alternatively be empty, that is, no fingerprint entry is included.

The "New fingerprint" control 222 may be configured to trigger the electronic device 10 to display a fingerprint enrollment interface. The "Fingerprint identification" control 223 may be configured to trigger the electronic device 10 to detect and identify an input of the user for a fingerprint collection region, and output a result of matching a fingerprint that is input by the user with one or more enrolled fingerprints.

In some embodiments, the fingerprint setting interface 220 further includes a return control 224, and the return control 224 may be configured to trigger the electronic device 10 to display the biometrics and password setting interface 210 shown in FIG. 2C. In some embodiments, the electronic device 10 may also display the biometrics and password setting interface 210 shown in FIG. 2C in response to a return operation (for example, a right sliding operation) of the user.

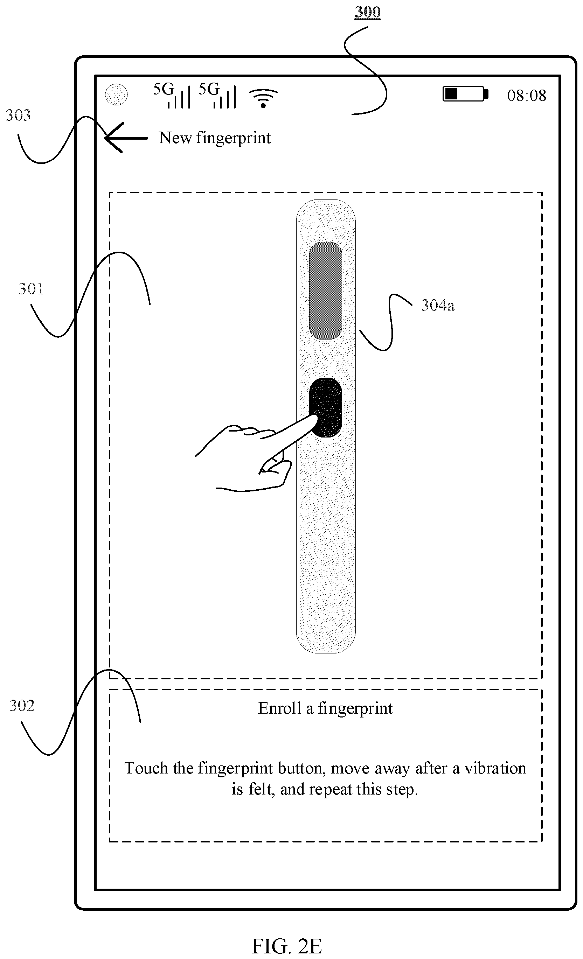

In some embodiments, the electronic device 10 may receive and respond to an input (for example, a tap operation) of the user on the "New fingerprint" control 222, display a fingerprint enrollment interface, and play, on the fingerprint enrollment interface, a guidance animation used to guide the user to enroll a fingerprint. For example, the fingerprint enrollment interface may be a fingerprint enrollment interface 300 shown in FIG. 2E.

As shown in FIG. 2E, the fingerprint enrollment interface 300 may include an image display region 301. In some embodiments, the fingerprint enrollment interface 300 may further include a text prompt region 302. The image display region 301 may be used to display a fingerprint enrollment guidance animation. For example, in FIG. 2E, an image 304a is displayed in the image display region 301. The image 304a may be a diagram of a position of a fingerprint collection region (for example, a fingerprint button or an under-screen fingerprint collection region) of the electronic device 10, and is used to prompt the user of the position of the fingerprint collection region of the electronic device 10. The image 304a may be a 1^{st} frame of image of the guidance animation. The text prompt region 302 may be used to display a text prompt that guides a specific operation of enrolling a fingerprint by the user. For example, texts displayed in the text prompt region 302 may be "Enroll a fingerprint" and "Touch the fingerprint button, move away after a vibration is felt, and repeat this step." In a fingerprint enrollment process, the image display region 301 may also be used to display an enrollment progress prompt (the enrollment progress prompt may be a preset enrollment progress animation, or may be another prompt form such as an image, a voice, or a vibration).

In some embodiments, the fingerprint enrollment interface 300 further includes a return control 303, and the return control 303 may be configured to trigger the electronic device 10 to display the fingerprint setting interface 220 shown in FIG. 2D. In some embodiments, the electronic device 10 may also display the fingerprint setting interface 220 shown in FIG. 2D in response to a return operation (for example, a right sliding operation) of the user.

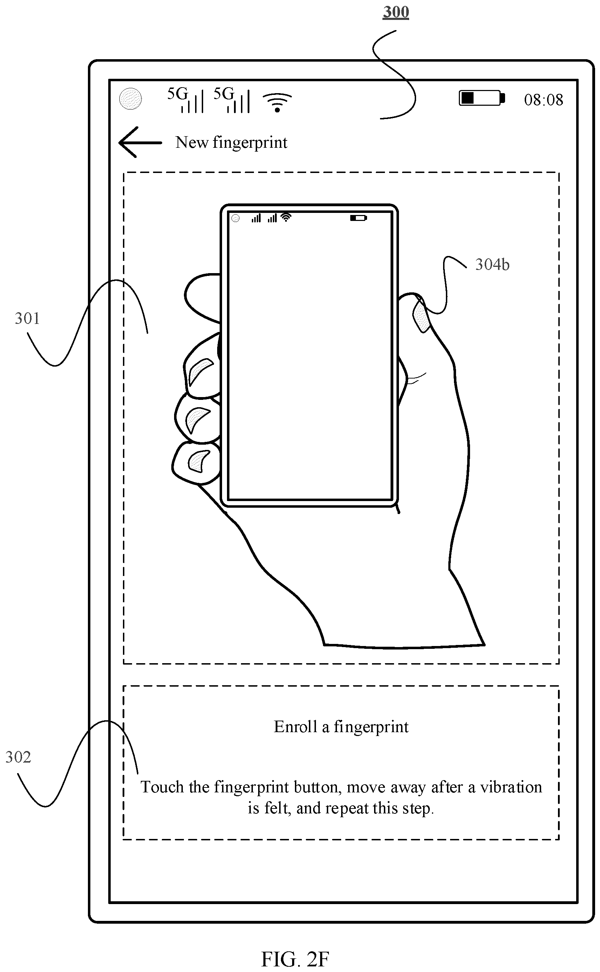

When display duration of the image 304a in the image display region 301 reaches preset duration 1, as shown in FIG. 2F, the electronic device 10 may disable displaying of the image 304a, and display an image 304b in the image display region 301.

As shown in FIG. 2F, the electronic device 10 displays a fingerprint enrollment interface 300. A difference from the fingerprint enrollment interface 300 shown in FIG. 2E is that in FIG. 2F, the image 304b is displayed in the image display region 301, and the image 304b is different from the image 304a. The image 304b is used to prompt the user to perform a fingerprint enrollment operation, that is, the finger of the user touches the fingerprint collection region. The image 304a displayed in FIG. 2E and the image 304b displayed in FIG. 2F may form one guidance animation, to guide the user to perform the fingerprint enrollment operation.

It may be understood that the guidance animation formed by the image 304a displayed in the image display region 301 in FIG. 2E and the image 304b displayed in the image display region 301 in FIG. 2F is merely an example. In another embodiment, the guidance animation displayed in the image display region 301 may include more or fewer images or other different images. This is not limited herein in this application.

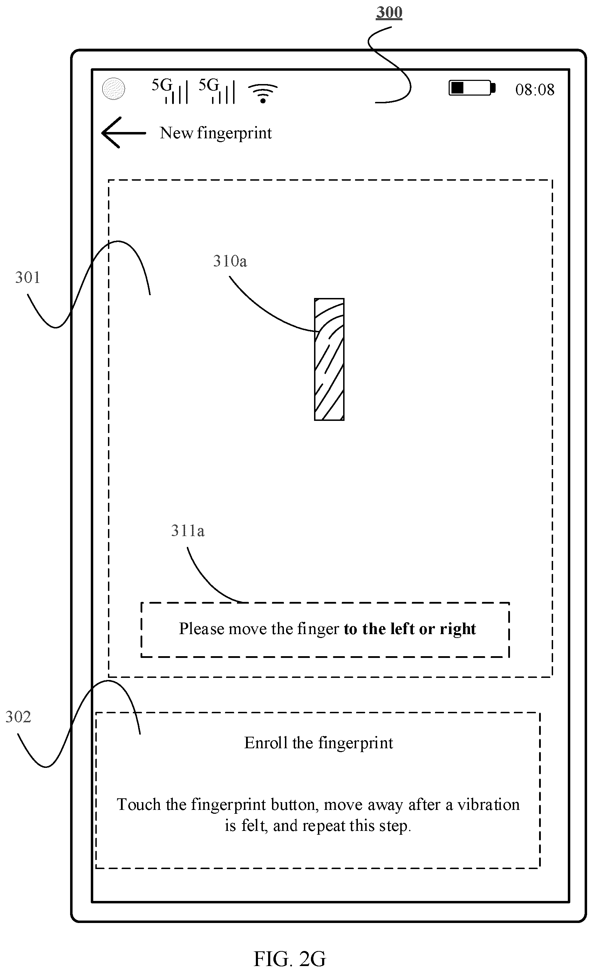

When the electronic device 10 displays the fingerprint enrollment interface 300 shown in FIG. 2E or FIG. 2F, the electronic device 10 may detect a touch operation of the finger of the user for the fingerprint collection region. In response to the touch operation, after the electronic device 10 collects the fingerprint of the finger of the user, as shown in FIG. 2G, the electronic device 10 may display a newly collected fingerprint, namely, a fingerprint 310a, on the fingerprint enrollment interface 300.

As shown in FIG. 2G, the electronic device 10 displays the fingerprint enrollment interface 300. For specific descriptions of the fingerprint enrollment interface 300, refer to related descriptions in the foregoing embodiment shown in FIG. 2E. Details are not described herein again. The fingerprint 310a may be displayed in the image display region 301 of the fingerprint enrollment interface 300. The fingerprint 310a may be a fingerprint collected by the electronic device 10 in response to the touch operation of the finger of the user for the fingerprint collection region. In some embodiments, a display position of the fingerprint 310a in the image display region 301 is related to a position of the newly collected fingerprint on the finger, that is, the display position of the fingerprint 310a in the image display region 301 may be used to prompt the user of the position of the newly collected fingerprint on the finger. For example, if the newly collected fingerprint is a fingerprint of a middle part of the finger, the fingerprint 310a may be displayed in the middle of the image display region 301. For another example, if the newly collected fingerprint is a fingerprint of an upper left part of the finger, the fingerprint 310a may be displayed in the upper left of the image display region 301.

In this way, the user may determine, based on the position of the newly collected fingerprint in the image display region 301, the position of the collected fingerprint on the finger, to determine a movement direction of the finger in a next step.

In some embodiments, the electronic device 10 may further display a movement direction prompt 311a, used to prompt the user of a direction of moving the finger in a next step. The movement direction prompt 311a may be displayed in the image display region 301, or may be displayed at another position on the fingerprint enrollment interface 300. For example, when the electronic device 10 determines, based on the collected fingerprint, that the movement direction in the next step is moving to the left, as shown in FIG. 2G, the movement direction prompt 311a may include a text "Please move the finger to the left".

In some embodiments, the movement direction prompt may alternatively prompt the user of the movement direction of the finger by using a pattern such as an arrow, or prompt the user of the movement direction of the finger in a voice form. This is not limited herein in this application.

In this way, the user may also determine a next movement direction of the finger based on the movement direction prompt output by the electronic device 10, so that repeated collection performed on a same region can be avoided, and fingerprint enrollment efficiency can also be improved.

In addition, a text prompt may also be displayed in the text prompt region 302, and the text prompt may be used to guide the user to perform the fingerprint enrollment operation. For example, the text prompt may include "Enroll a fingerprint" and "Touch the fingerprint collection region, move away after a vibration is felt, and repeat this step." The text prompt may also include another text. This is not limited herein in this application.

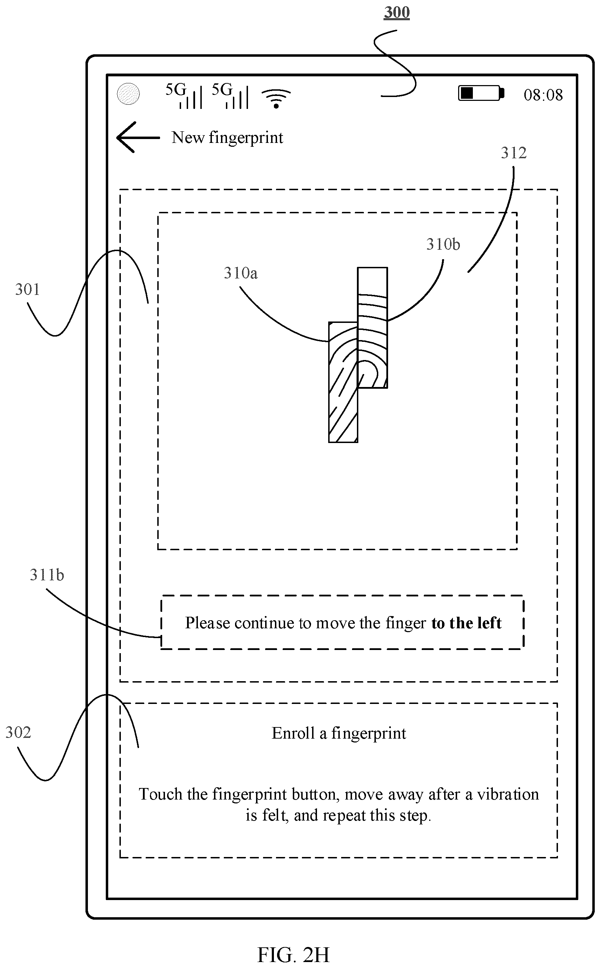

When the electronic device 10 displays the fingerprint enrollment interface 300 shown in FIG. 2G, the electronic device 10 may detect a touch operation of the finger of the user for the fingerprint collection region. The electronic device 10 may collect a new fingerprint in response to the touch operation; and after the electronic device 10 collects the fingerprint, as shown in FIG. 2H, the electronic device 10 may display all collected fingerprints, namely, an image 312, on the fingerprint enrollment interface 300.

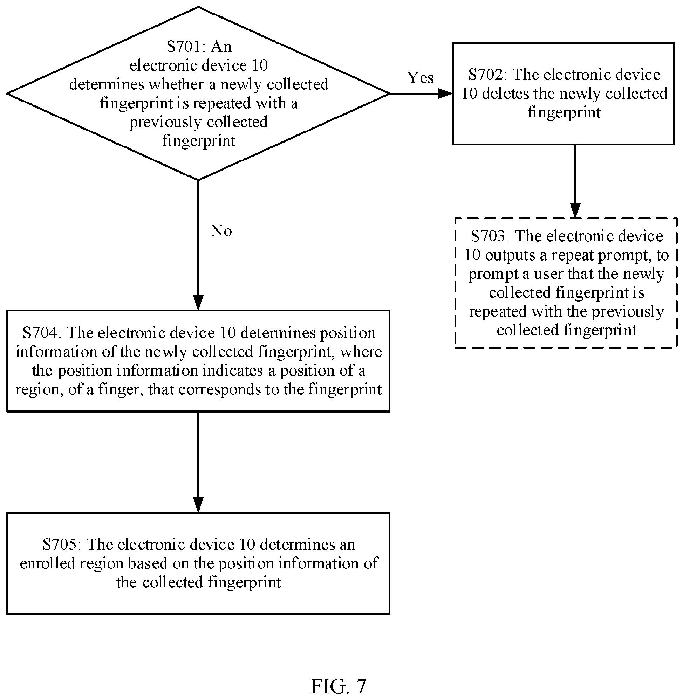

As shown in FIG. 2H, the electronic device 10 displays the fingerprint enrollment interface 300. The image 312 may be displayed in the image display region 301 of the fingerprint enrollment interface 300. The image 312 may include a fingerprint newly collected by the electronic device 10 (namely, a fingerprint 310b) and a fingerprint previously collected by the electronic device 10 (namely, a fingerprint 310a). In addition, the image 312 may be an image formed by splicing the fingerprint 310a and the fingerprint 310b based on fingerprint position information. The fingerprint position information may be used to determine a position of the fingerprint of the finger. For a specific manner of determining the fingerprint position information by the electronic device 10, refer to related descriptions in the following embodiment shown in FIG. 7. Details are not described herein.

For example, the electronic device 10 may determine that the position information of the fingerprint 310a is that the fingerprint 310a is a fingerprint of a region 1 of the finger, and determine that the position information of the fingerprint 310b is that the fingerprint 310b is a fingerprint of a region 2 of the finger; and the region 1 and the region 2 partially overlap. In this case, the electronic device 10 may determine, based on the position information of the fingerprint 310a and the position information of the fingerprint 310b, the image 312 shown in FIG. 2H. In the image 312, the fingerprint 310a and the fingerprint 310b partially overlap in a part of regions.

It should be noted that the display position of the image 312 in the image display region 301 may also be used to prompt the user of positions of regions corresponding to a plurality of collected fingerprints of the finger.

In addition, if the electronic device 10 determines, based on the position information of the fingerprint 310b and the position information of the fingerprint 310a, that a next movement direction of the finger of the user is moving to the left, the electronic device 10 may further disable displaying of a movement direction prompt 311a, and display a movement direction prompt 311b. As shown in FIG. 2H, the movement direction prompt 311b may include "Please continue to move the finger to the left".

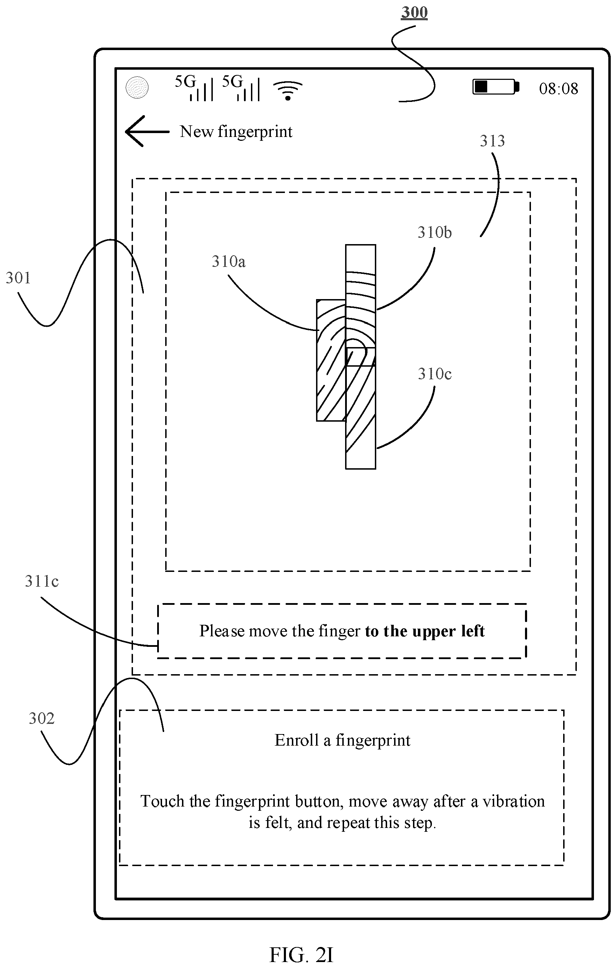

When the electronic device 10 displays the fingerprint enrollment interface 300 shown in FIG. 2H, the electronic device 10 may detect a touch operation of the finger of the user for the fingerprint collection region. The electronic device 10 may collect a new fingerprint in response to the touch operation; and after the electronic device 10 collects the fingerprint, as shown in FIG. 2I, the electronic device 10 may display all collected fingerprints, namely, an image 313, on the fingerprint enrollment interface 300.

As shown in FIG. 2I, the electronic device 10 displays the fingerprint enrollment interface 300. The image 313 may be displayed in the image display region 301 of the fingerprint enrollment interface 300. The image 313 may include a fingerprint newly collected by the electronic device 10 (namely, a fingerprint 310c) and fingerprints previously collected by the electronic device 10 (namely, a fingerprint 310a and a fingerprint 310b). In addition, the image 313 may be an image formed by splicing the fingerprint 310a, the fingerprint 310b, and the fingerprint 310c based on fingerprint position information. For a specific splicing manner, refer to related descriptions in the embodiment shown in FIG. 2H. Details are not described herein again.

It should be noted that the display position of the image 313 in the image display region 301 may also be used to prompt the user of positions of regions corresponding to a plurality of collected fingerprints of the finger.

In addition, if the electronic device 10 determines, based on the position information of the fingerprint 310c, the position information of the fingerprint 310b, and the position information of the fingerprint 310a, that a next movement direction of the finger of the user is moving to an upper left corner, the electronic device 10 may further disable displaying of a movement direction prompt 311b, and display a movement direction prompt 311c. As shown in FIG. 2I, the movement direction prompt 311c may include "Please move the finger to the upper left".

It may be understood that in a subsequent fingerprint enrollment process of the electronic device 10, the electronic device 10 may also collect a new fingerprint in response to a touch operation of the finger of the user for the fingerprint collection region, and display all collected fingerprints on the fingerprint enrollment interface 300. The electronic device 10 may further output a movement direction prompt based on position information of the collected fingerprints, to prompt the user of a movement direction of the finger in a next step. For a specific diagram of an interface, refer to related descriptions in the embodiment shown in FIG. 2G to FIG. 2I.

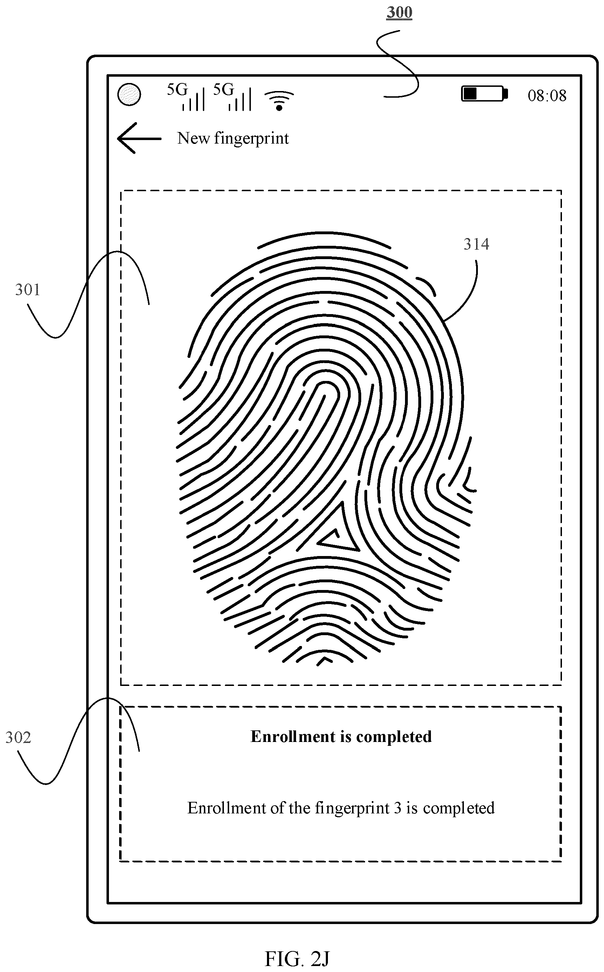

When the electronic device 10 displays the fingerprint enrollment interface 300, the electronic device 10 may detect a touch operation of the finger of the user for the fingerprint collection region. The electronic device 10 may collect a new fingerprint in response to the touch operation; and when the electronic device 10 determines that the collected fingerprint meets a preset condition (for example, an area of the enrolled region reaches a preset value, a quantity of collected fingerprints is greater than a preset quantity, or there is no missing region in the enrolled region), as shown in FIG. 2J, the electronic device 10 may output a completion prompt, to prompt the user that fingerprint enrollment is completed.

As shown in FIG. 2J, the electronic device 10 displays the fingerprint enrollment interface 300. An image 314 may be displayed in the image display region 301 of the fingerprint enrollment interface 300. The image 314 may be a complete fingerprint image (namely, a fingerprint image of a 1^{st} knuckle of the finger, or a fingerprint image in a preset range of a 1^{st} knuckle of the finger), or may be an image generated based on a plurality of collected fingerprints. In a text prompt region 302, a text prompt may be displayed, to prompt the user that fingerprint enrollment is completed. The text prompt may include "Enrollment is completed" and "Enrollment of the fingerprint 3 is completed". In some embodiments, the electronic device 10 may further output a completion prompt in one or more manners of a voice, a vibration, indicator blinking, and the like. This is not limited herein in this application.

According to the foregoing fingerprint enrollment method, in a fingerprint enrollment process, the electronic device 10 may output an enrollment prompt in real time based on a collected fingerprint, to indicate a fingerprint region that has been enrolled by the user and/or a movement direction of the finger of the user. The user may move the finger based on the enrollment prompt, to avoid repeated collection of a fingerprint of a same region of the finger, reduce a quantity of collection times, increase an area of an actually collected fingerprint, and improve fingerprint collection efficiency.

It should be noted that, in this embodiment of this application, the fingerprint collection region may be located on a side of the electronic device 10 (for example, a side capacitive fingerprint), or may be located at another position of the electronic device 10, for example, an under-screen optical fingerprint or an under-screen ultrasonic fingerprint. The position of the fingerprint collection region and a specific implementation of fingerprint collection are not limited in this embodiment of this application.

In some application scenarios, after the electronic device 10 collects the fingerprint of the finger of the user, an enrolled region prompt (or a missing region prompt) that is output based on one or more collected fingerprints may include a finger region image and a region identifier, and a display color of the region identifier is different from a display color of the finger region image. A position relationship between the region identifier and the finger region image may be used to prompt the user of the enrolled fingerprint region. The finger region image may include all regions of the 1^{st} knuckle of the finger (or all regions in the preset range of the 1^{st} knuckle), and the region identifier may be a part of the finger region image, namely, an image of one region in the finger region image. In some embodiments, the region identifier may also be an image that covers and is displayed in the finger region image and that is the same as an image of a region in the finger region image.

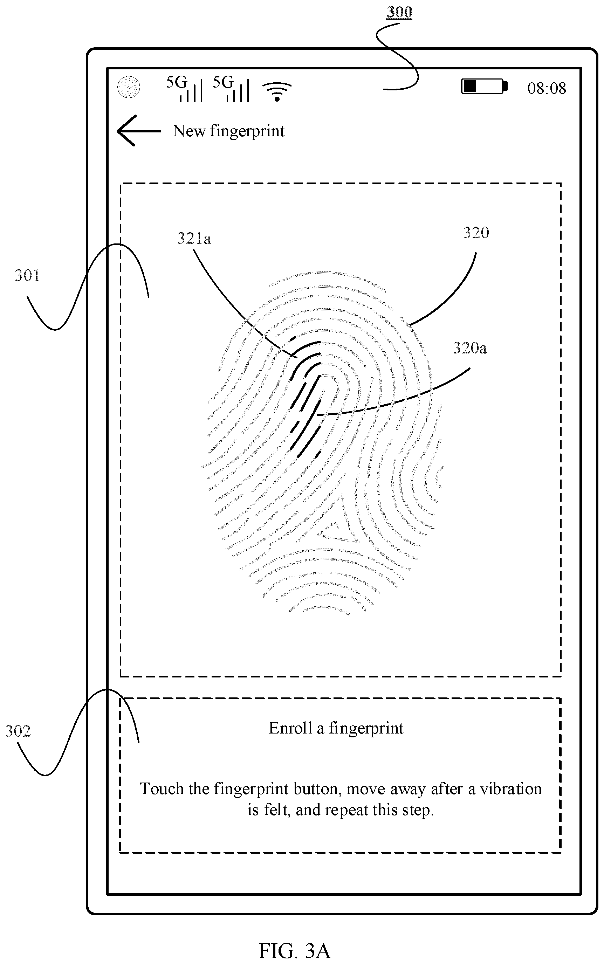

For example, when the electronic device 10 displays the fingerprint enrollment interface (for example, the fingerprint enrollment interface 300 shown in FIG. 2E or FIG. 2F), the electronic device 10 may detect a touch operation of the finger of the user for the fingerprint collection region. In response to the touch operation, after the electronic device 10 collects the fingerprint of the finger of the user, as shown in FIG. 3A, the electronic device 10 may display a finger region image 320 and a region identifier 321a on the fingerprint enrollment interface 300.

As shown in FIG. 3A, the electronic device 10 displays the fingerprint enrollment interface 300. For specific descriptions of the fingerprint enrollment interface 300, refer to related descriptions in the foregoing embodiment. Details are not described herein again. In the image display region 301 of the fingerprint enrollment interface 300, the finger region image 320 and the region identifier 321a may be displayed. A display color of the region identifier 321a is different from a display color of the finger region image 320. The region identifier 321a is displayed in a region 320a in the finger region image 320. The region identifier 321a may be an image of the region 320a in the finger region image 320, or may be an image that is the same as an image of the region 320a in the finger region image 320 and that covers and is displayed in the region 320a. It may be learned from a position relationship between the region identifier 321a and the finger region image 320 that a position relationship between the enrolled region and the finger is the same as a position relationship between the region 320a and the finger region image 320.

In this way, the user may determine, based on the position relationship between the region identifier and the finger region image, a position of a region corresponding to the collected fingerprint on the finger, to determine a next movement direction of the finger.

In addition, a text prompt may also be displayed in the text prompt region 302, and the text prompt may be used to guide the user to perform a fingerprint enrollment operation. For example, the text prompt may include "Enroll a fingerprint" and "Touch the fingerprint button, move away after a vibration is felt, and repeat this step." The text prompt may also include another text. This is not limited herein in this application.

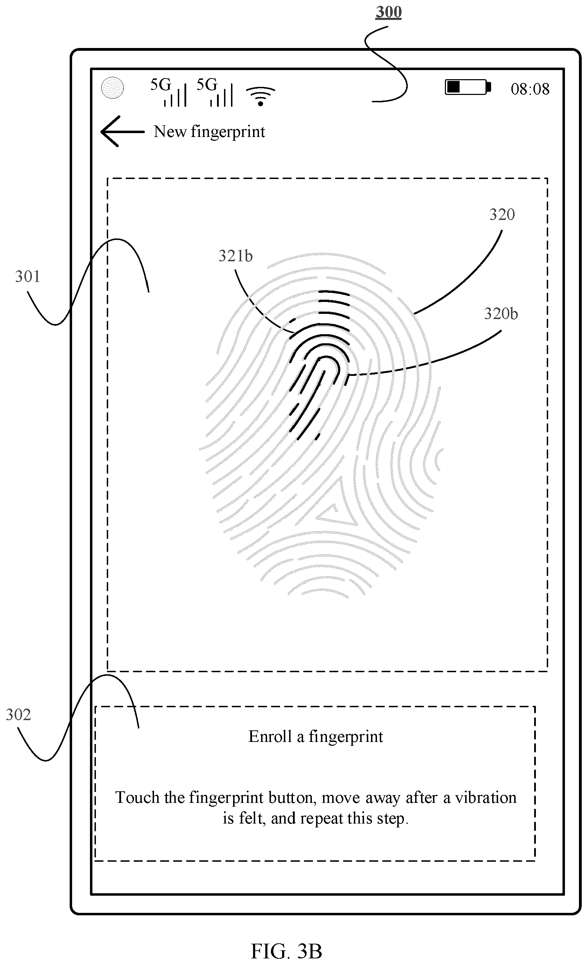

When the electronic device 10 displays the fingerprint enrollment interface 300 shown in FIG. 3A, the electronic device 10 may detect a touch operation of the finger of the user for the fingerprint collection region. The electronic device 10 may collect a new fingerprint in response to the touch operation; and after the electronic device 10 collects the fingerprint, as shown in FIG. 3B, the electronic device 10 may display the finger region image 320 and the region identifier 321b on the fingerprint enrollment interface 300, and a display region of the region identifier 321b in the finger region image 320 includes a display region of the region identifier 321a in the finger region image 320.

As shown in FIG. 3B, the electronic device 10 displays the fingerprint enrollment interface 300. In the image display region 301 of the fingerprint enrollment interface 300, the finger region image 320 and the region identifier 321b may be displayed. A display color of the region identifier 321b is different from a display color of the finger region image 320. The region identifier 321b is displayed in a region 320b in the finger region image 320. The region identifier 321b may be an image of the region 320b in the finger region image 320, or may be an image that is the same as an image of the region 320b in the finger region image 320 and that covers and is displayed in the region 320b. The region 320b includes a region 320a, that is, a display region of the region identifier 321b in the finger region image 320 includes a display region of the region identifier 321a in the finger region image 320.

In addition, it may be learned from a position relationship between the region identifier 321b and the finger region image 320 that a position relationship between the enrolled region and the finger is the same as a position relationship between the region 320b and the finger region image 320.

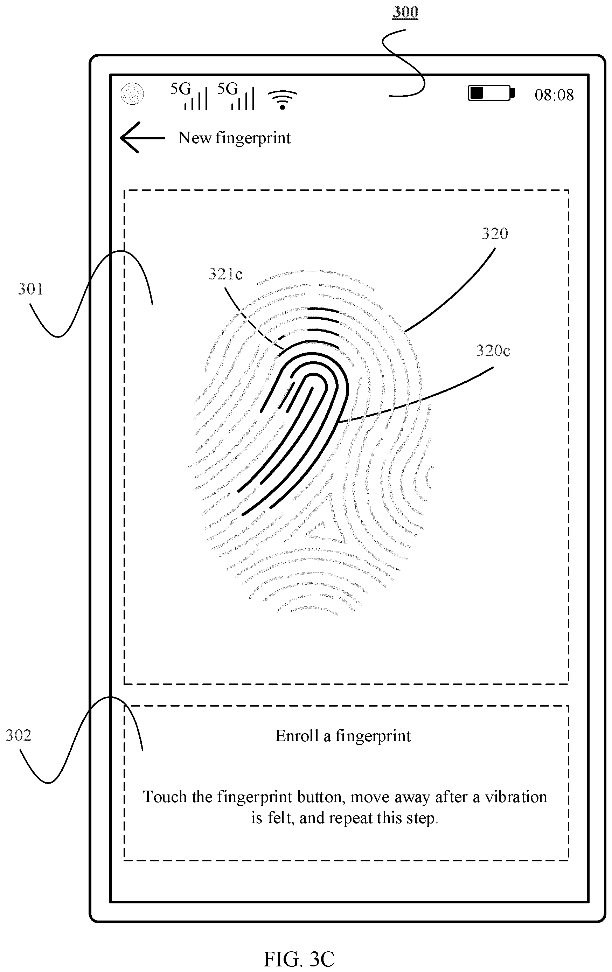

Similarly, when the electronic device 10 displays the fingerprint enrollment interface 300 shown in FIG. 3B, the electronic device 10 may detect a touch operation of the finger of the user for the fingerprint collection region. The electronic device 10 may collect a new fingerprint in response to the touch operation; and after the electronic device 10 collects the fingerprint, as shown in FIG. 3C, the electronic device 10 may display the finger region image 320 and the region identifier 321c on the fingerprint enrollment interface 300, and a display region of the region identifier 321c in the finger region image 320 includes a display region of the region identifier 321b in the finger region image 320.

As shown in FIG. 3C, the electronic device 10 displays the fingerprint enrollment interface 300. In the image display region 301 of the fingerprint enrollment interface 300, the finger region image 320 and the region identifier 321c may be displayed. A display color of the region identifier 321c is different from a display color of the finger region image 320. The region identifier 321c is displayed in a region 320c in the finger region image 320. The region identifier 321c may be an image of the region 320c in the finger region image 320, or may be an image that is the same as an image of the region 320c in the finger region image 320 and that covers and is displayed in the region 320c. The region 320c includes a region 320b, that is, a display region of the region identifier 321c in the finger region image 320 includes a display region of the region identifier 321b in the finger region image 320.

In addition, it may be learned from a position relationship between the region identifier 321c and the finger region image 320 that a position relationship between the enrolled region and the finger is the same as a position relationship between the region 320c and the finger region image 320.

In some embodiments, in the embodiment shown in FIG. 3A to FIG. 3C, the electronic device 10 may also display a movement direction prompt (not shown in FIG. 3A to FIG. 3C), to prompt the user of a next optimal direction of moving the finger. For specific content of the movement direction prompt, refer to related descriptions in the embodiment shown in FIG. 2G. Details are not described herein again.

It may be understood that, in a subsequent fingerprint enrollment process of the electronic device 10, the electronic device 10 may also collect a new fingerprint in response to the touch operation of the finger of the user for the fingerprint collection region, and display the finger region image 320 and a new region identifier on the fingerprint enrollment interface 300, and a display region of the new region identifier in the finger region image 320 includes a display region of a previous region identifier in the finger region image 320.

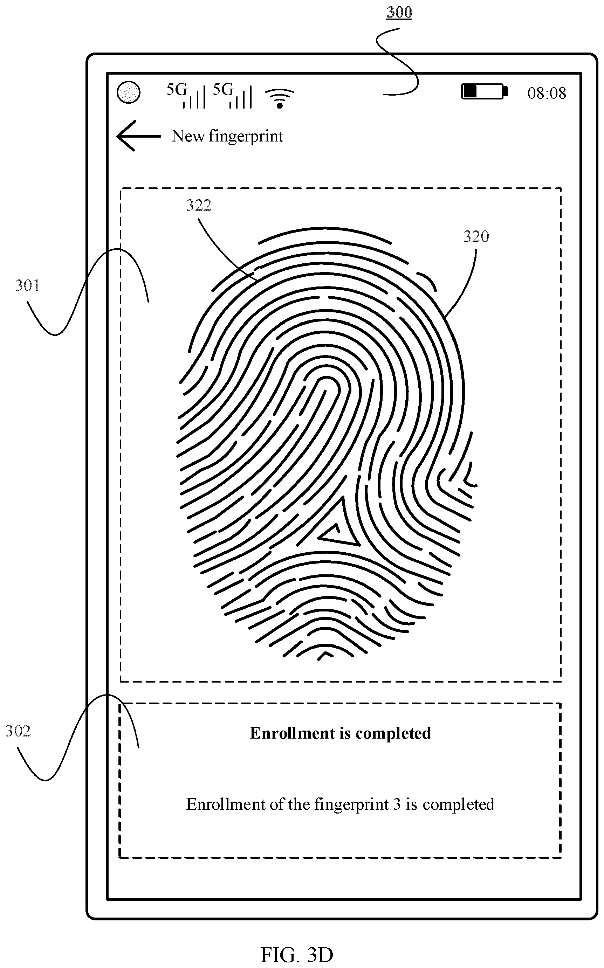

When the electronic device 10 displays the fingerprint enrollment interface 300, the electronic device 10 may detect a touch operation of the finger of the user for the fingerprint collection region. The electronic device 10 may collect a new fingerprint in response to the touch operation; and when the electronic device 10 determines that the collected fingerprint meets a preset condition (for example, an area of the enrolled region reaches a preset value, or a quantity of collected fingerprints is greater than a preset quantity), as shown in FIG. 3D, the electronic device 10 may output a completion prompt, to prompt the user that fingerprint enrollment is completed.

As shown in FIG. 3D, the electronic device 10 displays the fingerprint enrollment interface 300. In the image display region 301 of the fingerprint enrollment interface 300, an image 322 may be displayed. The image 322 may be a fingerprint image that is the same as that of the finger region image 320 but whose display color is different.

In a text prompt region 302, a text prompt may be displayed, to prompt the user that fingerprint enrollment is completed. The text prompt may include "Enrollment is completed" and "Enrollment of the fingerprint 3 is completed". In some embodiments, the electronic device 10 may further output a completion prompt in one or more manners of a voice, a vibration, indicator blinking, and the like. This is not limited herein in this application.

According to the foregoing fingerprint enrollment method, in a fingerprint enrollment process, the electronic device 10 may output an enrollment prompt in real time based on a collected fingerprint, to indicate a fingerprint region that has been enrolled by the user. The user may move the finger based on the enrollment prompt, to avoid repeated collection of a fingerprint of a same region of the finger, reduce a quantity of collection times, increase an area of an actually collected fingerprint, and improve fingerprint collection efficiency.

In some application scenarios, after the electronic device 10 collects the fingerprint of the finger of the user, the enrollment prompt that is output based on the one or more collected fingerprints may include a movement direction prompt, to prompt the user of a next movement direction of the finger. The movement direction prompt may include an image prompt. In some embodiments, the movement direction prompt may further include one or more manners of a text prompt, a vibration prompt, a voice prompt, an indicator blinking prompt, and the like.

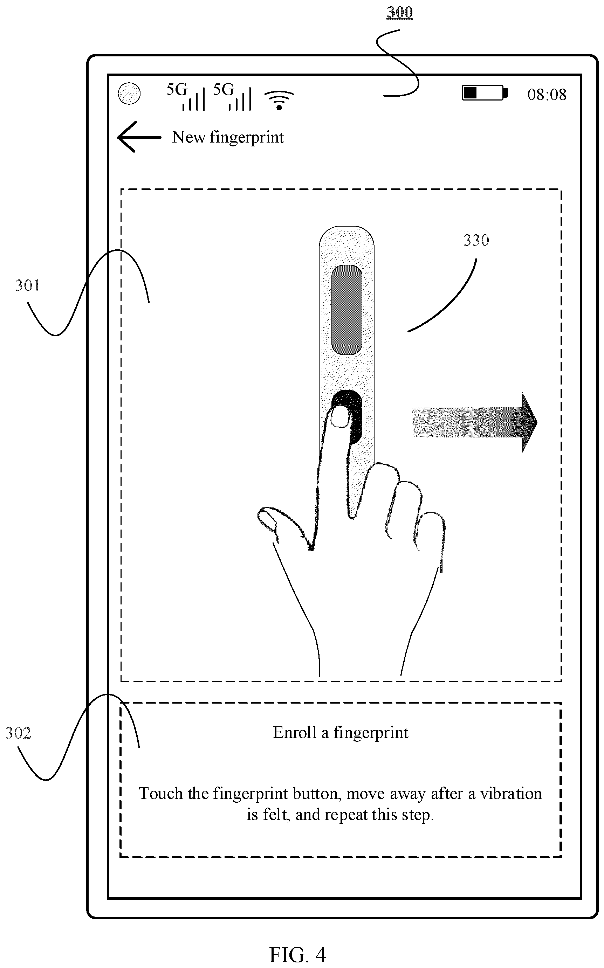

For example, when the electronic device 10 displays the fingerprint enrollment interface 300, the electronic device 10 may detect a touch operation of the finger of the user for the fingerprint collection region. In response to the touch operation, after the electronic device 10 collects the fingerprint of the finger of the user, the electronic device 10 may display an image 330 on the fingerprint enrollment interface 300 based on the plurality of collected fingerprints, as shown in FIG. 4, and the image 330 may be used to prompt the user of a movement direction of the finger in a next step.

As shown in FIG. 4, the electronic device 10 displays the fingerprint enrollment interface 300. For specific descriptions of the fingerprint enrollment interface 300, refer to related descriptions in the foregoing embodiment. Details are not described herein again. In the image display region 301 of the fingerprint enrollment interface 300, the image 330 may be displayed, and the image 330 may be used to prompt the user of a movement direction of the finger in a next step. The image 330 may be a static image or a dynamic image (for example, an animation). For example, when the electronic device 10 determines, based on the plurality of collected fingerprints, that the next movement direction of the finger of the user is moving to the right, as shown in FIG. 4, the image 330 may include the finger of the user, the fingerprint collection region of the electronic device 10, and a right arrow. The finger of the user is located in the fingerprint collection region of the electronic device 10, and the right arrow is located on the right of the finger of the user, and may indicate the user to move the finger to the right.

In some embodiments, in the text prompt region 302 of the fingerprint enrollment interface 300, the text prompt may be displayed, and the text prompt may also be used to prompt the user of a movement direction of the finger. For example, the text prompt may include texts "Enroll a fingerprint" and "Please move the finger to the right and touch the fingerprint button, and move away after a vibration is felt."

It may be understood that this embodiment herein is merely an example. In this embodiment of this application, if the electronic device 10 determines that the movement direction of the finger is another direction, the movement direction prompt output by the electronic device 10 may also be a corresponding direction. In addition, the movement direction prompt output by the electronic device 10 may also be one or more manners of an image, a voice, a vibration, and the like. This is not limited herein in this application.

It may be understood that in a subsequent fingerprint enrollment process of the electronic device 10, the electronic device 10 may also collect a new fingerprint in response to a touch operation of the finger of the user for the fingerprint collection region, and output a movement direction prompt based on the collected fingerprint. When the electronic device 10 determines that the collected fingerprint meets a preset condition (for example, an area of the enrolled region reaches a preset value, or a quantity of collected fingerprints is greater than a preset quantity), the electronic device 10 may output a completion prompt, to prompt the user that fingerprint enrollment is completed. For a diagram of an interface for outputting a completion prompt by the electronic device 10, refer to the fingerprint enrollment interface 300 shown in FIG. 2J or FIG. 3D.

According to the foregoing fingerprint enrollment method, in a fingerprint enrollment process, the electronic device 10 may output an enrollment prompt in real time based on a collected fingerprint, to indicate a movement direction of the finger. The user may move the finger based on the enrollment prompt, to avoid repeated collection of a fingerprint of a same region of the finger, reduce a quantity of collection times, increase an area of an actually collected fingerprint, and improve fingerprint collection efficiency.

In some application scenarios, after displaying the fingerprint enrollment interface 300 in response to an output (for example, a tap operation) of the user on the "New fingerprint" control 222 shown in FIG. 2D, the electronic device 10 may play, in some embodiments, a guidance animation of friction sliding fingerprint enrollment. When the electronic device 10 displays the fingerprint enrollment interface 300, the electronic device 10 may detect a friction sliding operation of the finger of the user for the fingerprint collection region, and collect fingerprints of a plurality of regions of the finger at a preset frequency. The friction sliding operation of the finger of the user for the fingerprint collection region is an operation in which the finger moves in any direction in the fingerprint collection region, and may change a movement direction at any time in the moving process.

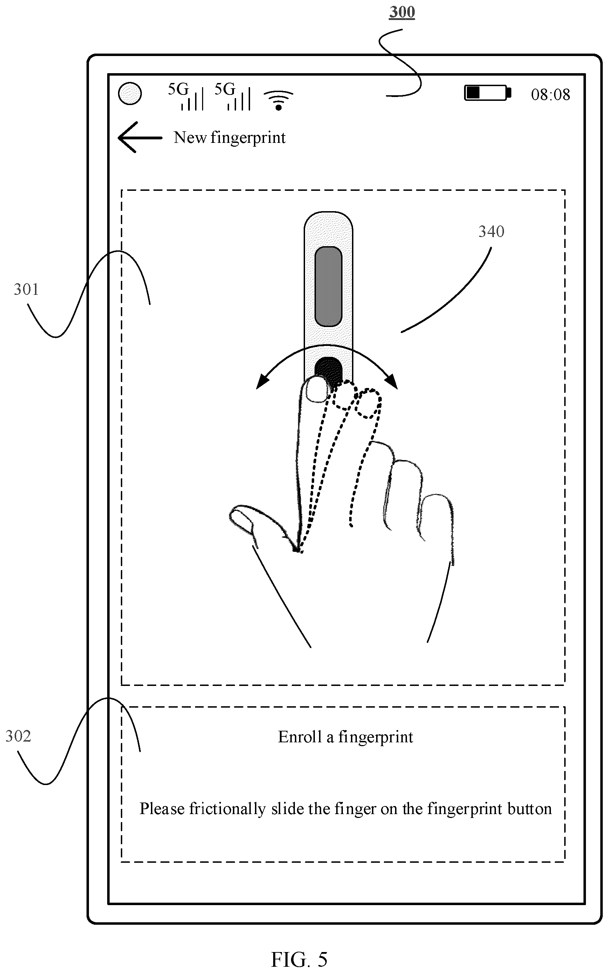

For example, the electronic device 10 may display the fingerprint enrollment interface 300 shown in FIG. 5 in response to an output (for example, a tap operation) of the user on the "New fingerprint" control 222 shown in FIG. 2D, and play a guidance animation 340.

As shown in FIG. 5, the electronic device 10 displays the fingerprint enrollment interface 300. For specific descriptions of the fingerprint enrollment interface 300, refer to related descriptions in the foregoing embodiment. Details are not described herein again. In the image display region 301 of the fingerprint enrollment interface 300, the guidance animation 340 may be played. The guidance animation 340 may be used to prompt the user to perform the friction sliding fingerprint enrollment operation. For example, in FIG. 5, the guidance animation 340 may include the finger of the user and the fingerprint collection region of the electronic device 10. In a process of playing the guidance animation 340, the finger of the user may move in any direction in the fingerprint collection region of the electronic device 10, and may change a movement direction of the finger at any time. In some embodiments, the guidance animation 340 may further include an indication arrow. The indication arrow may be located next to the finger of the user, and may indicate a movable direction of the finger of the user. In a process of playing the guidance animation 340, the indication arrow may also change an indication direction of the arrow.

In some embodiments, in the text prompt region 302 of the fingerprint enrollment interface 300, the text prompt may be displayed, and the text prompt may also be used to prompt the user how to perform the friction sliding fingerprint enrollment operation. For example, the text prompt may include texts "Enroll a fingerprint" and "Please frictionally slide the finger on the fingerprint button".

When the electronic device 10 displays the fingerprint enrollment interface 300, the electronic device 10 may collect fingerprints of a plurality of regions of the finger in response to the friction sliding operation of the finger of the user for the fingerprint collection region.

In some embodiments, in the fingerprint enrollment process of the electronic device 10, the electronic device 10 may also output an enrollment prompt in real time based on the collected fingerprint. The enrollment prompt may include an enrolled region prompt (or a missing region prompt) and/or a movement direction prompt. For specific content of the enrollment prompt, refer to related descriptions in the embodiments shown in FIG. 2G to FIG. 2I and FIG. 3A to FIG. 3C. Details are not described herein again.

In some embodiments, if the finger of the user leaves the fingerprint collection region before fingerprint enrollment is completed, the electronic device 10 may also output an operation prompt 1, to prompt the user to perform friction sliding of the finger in the fingerprint collection region again. If the finger of the user does not leave the fingerprint collection region before fingerprint enrollment is completed, in some embodiments, the electronic device 10 may also output an operation prompt 2, to prompt the user to continue to perform a friction sliding operation with the finger in the fingerprint collection region.

When the electronic device 10 determines that the collected fingerprint meets a preset condition (for example, an area of the enrolled region reaches a preset value, or a quantity of collected fingerprints is greater than a preset quantity), the electronic device 10 may output a completion prompt, to prompt the user that fingerprint enrollment is completed. For a diagram of an interface for outputting a completion prompt by the electronic device 10, refer to the fingerprint enrollment interface 300 shown in FIG. 2J or FIG. 3D.

It may be understood that the embodiment shown in FIG. 5 is merely an example. In this embodiment of this application, when the electronic device 10 performs the friction sliding fingerprint enrollment method, the electronic device 10 may also display a guidance animation different from that of the fingerprint enrollment interface 300 shown in FIG. 5, or may not display the guidance animation, but guide the user to perform the fingerprint enrollment operation in a manner such as a voice prompt or a text prompt. This is not limited herein in this application.

According to the foregoing friction sliding fingerprint enrollment method, when detecting that the finger of the user frictionally slides in the fingerprint collection region, the electronic device 10 may collect the plurality of fingerprints at the preset frequency, and the user does not need to frequently lift the finger from the fingerprint collection region. This reduces fingerprint collection time, and improves collection efficiency. In addition, because the finger of the user may randomly slide in the fingerprint collection region, an actual contact region between the finger and the fingerprint collection region is increased, so that an area of the fingerprint collected by the electronic device 10 can be increased, and a miss probability of subsequent fingerprint identification can be reduced, improving fingerprint identification efficiency.

It should be noted that, when the foregoing friction sliding fingerprint enrollment method is used, the user may not lift a hand in the collection process, that is, a fingerprint of each region of the finger may be collected through friction sliding of the finger in the fingerprint collection region at a time, to implement fingerprint enrollment.

The following describes a method procedure of a fingerprint enrollment method provided in embodiments of this application.

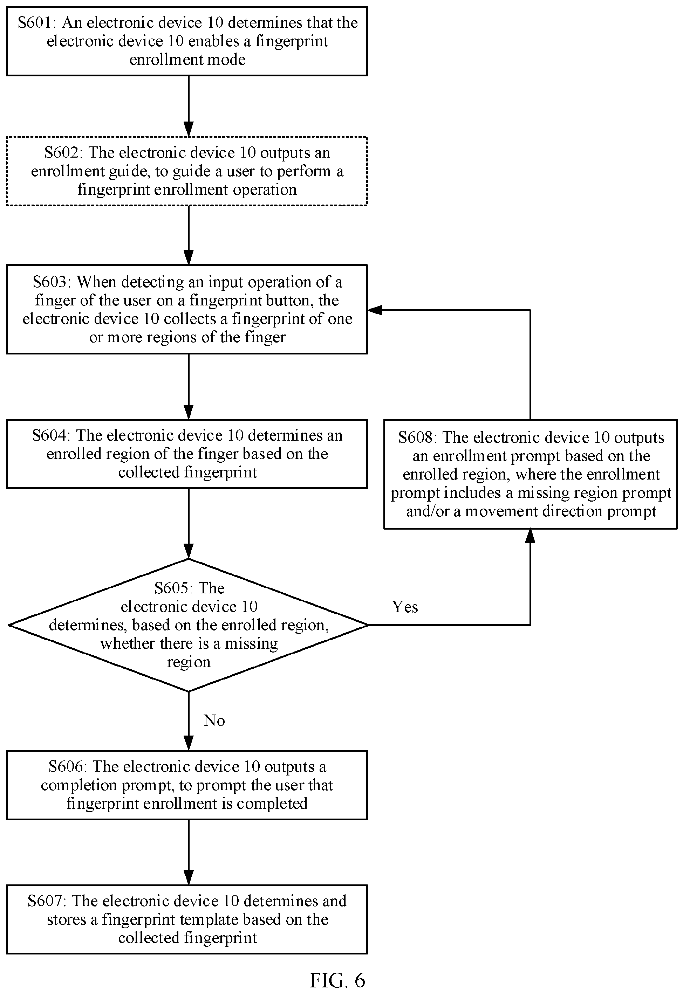

As shown in FIG. 6, a specific procedure of a fingerprint enrollment method according to an embodiment of this application may include the following steps.

S601: An electronic device 10 determines that the electronic device 10 enables a fingerprint enrollment mode.

The electronic device 10 may enable the fingerprint enrollment mode in response to an operation of a user on the electronic device 10, and enroll a new fingerprint. For example, the electronic device 10 may enable the fingerprint enrollment mode in response to an output (a tap operation) of the user on the "New fingerprint" control 222 shown in FIG. 2D, and display the fingerprint enrollment interface 300 shown in FIG. 2E.

In some embodiments, if the electronic device 10 displays a fingerprint enrollment interface (for example, the fingerprint enrollment interface 300 shown in FIG. 2E, FIG. 2F, or FIG. 5), the electronic device 10 may determine that the electronic device 10 enables the fingerprint enrollment mode.

S602: The electronic device 10 outputs an enrollment guide, to guide the user to perform a fingerprint enrollment operation.

Step S602 is an optional step.

After the fingerprint enrollment mode is enabled, the electronic device 10 may output the enrollment guide. The enrollment guide may be used to guide the user to perform the fingerprint enrollment operation. The enrollment guide may be a guidance animation. For example, the guidance animation may be the guidance animation formed by the image 304a in the embodiment shown in FIG. 2E and the image 304b in the embodiment shown in FIG. 2F, or the guidance animation may be the guidance animation 340 in the embodiment shown in FIG. 5. In some embodiments, the enrollment guide may also include a text prompt. For example, the text prompt may be texts "Enroll a fingerprint" and "Touch the fingerprint button, move away after a vibration is felt, and repeat this step" displayed in the text prompt region 302 shown in FIG. 2E. For another example, the text prompt may also be texts "Enroll a fingerprint", "Please frictionally slide the finger on the fingerprint button", and the like displayed in the text prompt region 302 shown in FIG. 5.

It may be understood that, herein, this is merely an example of descriptions that the enrollment guide may be output in manners such as the guidance animation and/or the text prompt. In some embodiments, the enrollment guide may also be any one or more of manners such as an image, an animation, a voice, a text, and a vibration. This is not limited herein in this application.

S603: When detecting an input operation of a finger of the user for a fingerprint collection region, the electronic device 10 collects a fingerprint of one or more regions of the finger.

The fingerprint collection region is a region that is on the electronic device 10 and that is used to collect the fingerprint of the user.

It should be noted that, in this embodiment of this application, the fingerprint collection region may be located on a side of the electronic device 10 (for example, a side capacitive fingerprint), or may be located at another position of the electronic device 10, for example, an under-screen optical fingerprint or an under-screen ultrasonic fingerprint. The position of the fingerprint collection region and a specific implementation of fingerprint collection are not limited in this embodiment of this application.

The input operation of the user for the fingerprint collection region may be a touch operation of the user for the fingerprint collection region, or may be a friction sliding operation of the user for the fingerprint collection region. The friction sliding operation of the user for the fingerprint collection region is an operation in which the finger of the user slides in any direction in the fingerprint collection region of the electronic device 10 and may change a movement direction at any time in the moving process.

If the electronic device 10 detects the touch operation of the user for the fingerprint collection region, the electronic device 10 may collect a fingerprint of one region of the finger in response to the touch operation, where the region is a contact region between the finger of the user and the fingerprint collection region.

If the electronic device 10 detects the friction sliding operation of the user for the fingerprint collection region, the electronic device 10 may collect a fingerprint of one or more regions of the finger at a preset frequency in response to the friction sliding operation. A quantity of collected fingerprints is related to time of friction sliding of the finger in the fingerprint collection region.

In some embodiments, when collecting fingerprints, the electronic device 10 may further record a collection sequence of the fingerprints.

In some other embodiments, in a fingerprint collection process of the electronic device 10, an example in which a region 1 of the finger is in contact with the fingerprint collection region is used. If collection fails (for example, the electronic device 10 cannot collect a fingerprint of the region 1, or a fingerprint, of the region 1, that is collected by the electronic device 10 does not reach preset definition), the electronic device 10 may also output a failure prompt, to prompt the user to touch the fingerprint collection region again by using the region 1 of the finger, and collect the fingerprint of the region 1. It may be understood that, only an example is used herein for description that in the fingerprint collection process, the electronic device 10 may further output the failure prompt. An actual position of the region 1 is not limited in this embodiment of this application.

S604: The electronic device 10 determines an enrolled region of the finger based on the collected fingerprint.

The enrolled region is a region, of the finger of the user, in which the fingerprint is collected. If the collected fingerprint includes a fingerprint of one or more regions of the finger, the electronic device 10 may determine the enrolled region of the finger based on the one or more regions.

It should be noted that, when the electronic device 10 detects the friction sliding operation of the user for the fingerprint collection region, the electronic device 10 may determine, based on whether a reporting condition is met, whether the enrolled region is determined based on a plurality of newly collected fingerprints. The reporting condition may include any one or more of the following: the quantity of collected fingerprints reaches a preset reporting quantity, duration of the friction sliding operation of the user for the fingerprint collection region reaches preset duration, the electronic device 10 detects that the finger of the user leaves the fingerprint collection region, and so on.

For a specific procedure in which the electronic device 10 determines the enrolled region of the finger based on the collected fingerprint, refer to specific content in the following embodiment shown in FIG. 7.

For example, as shown in FIG. 7, the specific procedure in which the electronic device 10 determines the enrolled region of the finger based on the collected fingerprint may include the following steps.

S701: The electronic device 10 determines whether a newly collected fingerprint is repeated with a previously collected fingerprint.

In this embodiment of this application, the fingerprint collected by the electronic device 10 may include the fingerprint of the one or more regions of the finger. According to the collection sequence of the fingerprint of the one or more regions, the collected fingerprint may further include the newly collected fingerprint and the previously collected fingerprint.

In some embodiments, the electronic device 10 may determine, based on a value relationship between a similarity value between fingerprints of two regions and a preset similarity value, whether the fingerprints of the two regions are repeated. For example, if a similarity value between a fingerprint A1 of a region 1 and a fingerprint B1 of a region 2 is greater than a preset similarity value, the electronic device 10 may determine that the fingerprint A1 is repeated with the fingerprint B1.

If the electronic device 10 determines that the newly collected fingerprint is repeated with any previously collected fingerprint, the electronic device 10 performs the following step S702.

If the electronic device 10 determines that a part of newly collected fingerprints all are not repeated with any previously collected fingerprint, the electronic device 10 performs the following step S704.

S702: The electronic device 10 deletes the newly collected fingerprint.

When the newly collected fingerprint is repeated with the previously collected fingerprint, the electronic device 10 may delete the newly collected fingerprint.

In some embodiments, if the newly collected fingerprint is partially repeated with the previously collected fingerprint, the electronic device 10 may also delete a fingerprint of the repeated part from the newly collected fingerprint, and retain a fingerprint of the other non-repeated part.

For example, if the newly collected fingerprint is the fingerprint A1 of the region 1, the previously collected fingerprint includes the fingerprint B1 of the region 2, there is an intersection region 3 between the region 1 and the region 2, and a fingerprint corresponding to the region 3 is a fingerprint C1, after the electronic device 10 determines that the fingerprint A1 is repeated with the fingerprint B1, the electronic device 10 may delete the fingerprint C1 corresponding to the region 3 from the fingerprint A1, and retain a fingerprint of the other part in the fingerprint A1.

S703: The electronic device 10 outputs a repeat prompt, to prompt the user that the newly collected fingerprint is repeated with the previously collected fingerprint.

Step S703 is an optional step.

The repeat prompt may be any one or more manners of a text, an animation, an image, a voice, a vibration, and the like. For example, the repeat prompt may be texts "Please move the finger" and "Enroll the fingerprint from different angles and directions, to ensure complete enrollment" displayed in the text prompt region 302 in the embodiment shown in FIG. 2I. For another example, the repeat prompt may also be a voice prompt "fingerprint enrollment is repeated, and please move the finger" played by the electronic device 10.

S704: The electronic device 10 determines position information of the newly collected fingerprint, where the position information indicates a position of the region, of the finger, that corresponds to the fingerprint.

The position information may be coordinate information. For example, the electronic device 10 may establish a coordinate system with a center of a 1^{st} knuckle of the finger as a two-dimensional coordinate origin. The coordinate information of the fingerprint may include a group of coordinates, to indicate a position of a region occupied by the fingerprint in the two-dimensional coordinate system.

In some embodiments, the position information may alternatively be a region identifier. For example, the electronic device 10 may divide a 1^{st} knuckle of the finger into a plurality of regions, each region may be a region whose area is similar to that of the fingerprint collection region, and the plurality of regions may overlap with each other. For a fingerprint of one region of the finger, position information of the fingerprint may include one region identifier, and the region identifier indicates the region corresponding to the fingerprint. The electronic device 10 may determine, based on a position of the region, a position of the region, of the finger, that corresponds to the fingerprint.

In some embodiments, the position information may alternatively be a block identifier. For example, the electronic device 10 may also divide a 1^{st} knuckle of the finger into a plurality of blocks with a small area (an area of the block is far less than that of the fingerprint collection region). For a fingerprint of one region of the finger, position information of the fingerprint may include a plurality of block identifiers, and the plurality of block identifiers indicate a plurality of blocks included in the region. The electronic device 10 may determine, based on positions of the plurality of blocks, a position of the region, of the finger, that corresponds to the fingerprint.

It may be understood that content of several types of position information is merely provided herein as an example. In this embodiment of this application, the position information of the fingerprint may alternatively be other information that can be used to determine the position of the region, of the finger, that corresponds to the fingerprint. This is not limited herein in this application.

For example, a specific procedure in which the electronic device 10 determines the position information of the fingerprint based on the fingerprint may include the following steps.
1. The electronic device 10 determines a pattern feature of the fingerprint based on the fingerprint.
   The pattern feature of the fingerprint may be information such as a trend, a direction, and a radian of the pattern in the fingerprint.
2. The electronic device 10 determines, based on the pattern feature of the fingerprint and pattern features of different regions of the fingerprint stored in the electronic device 10, similarity values between fingerprint features of different regions and the pattern feature of the fingerprint.
   The pattern features of the different regions of the fingerprint may be obtained by the electronic device 10 from another electronic device, or may be obtained by the electronic device 10 through analysis based on a plurality of fingerprints in a fingerprint information base.
3. The electronic device 10 determines a region with a largest similarity value as the region corresponding to the fingerprint, and obtains the position information of the fingerprint based on the position of the region of the finger.

It may be understood that only an example of a manner in which the electronic device 10 determines the position information of the fingerprint based on the fingerprint is described herein. In this embodiment of this application, the electronic device 10 may alternatively determine the position information of the fingerprint in a manner different from that in the foregoing embodiment. This is not limited herein in this application.

S705: The electronic device 10 determines the enrolled region based on the position information of the collected fingerprint.

The electronic device 10 may determine the enrolled region based on position information of one or more collected fingerprints.

For example, if the collected fingerprints include a fingerprint A1 of a region 1 and a fingerprint B1 of a region 2, the enrolled region may include a union set of the region 1 and the region 2.

For another example, if the collected fingerprints include a fingerprint A1 and a fingerprint B1, position information of the fingerprint A1 includes a block 1, a block 2, a block 3, and a block 4, and position information of the fingerprint B1 includes the block 1, a block 5, a block 6, and a block 7, the enrolled region may include the block 1, the block 2, the block 3, the block 4, the block 5, the block 6, and the block 7.

In the manner described in the embodiment shown in FIG. 7, the enrolled region may be determined based on the collected fingerprint. It may be understood that FIG. 7 is merely an example. In this embodiment of this application, the electronic device 10 may alternatively determine the enrolled region in a manner different from that in FIG. 7. This is not limited herein in this application.

S605: The electronic device 10 determines, based on the enrolled region, whether there is a missing region.

After determining the enrolled region, the electronic device 10 may determine the missing region based on all regions (or all blocks, or a region occupied by the 1^{st} knuckle in the two-dimensional coordinate system) of the 1^{st} knuckle of the finger and the enrolled region. The missing region is also referred to as a non-enrolled region in this embodiment of this application.

For example, if the 1^{st} knuckle of the finger includes the following plurality of non-overlapping regions: a region 1, a region 2, a region 3, a region 4, and a region 5, and enrolled regions include the region 1 and the region 2, the electronic device 10 may determine that missing regions include the region 3, the region 4, and the region 5.

In some embodiments, the electronic device 10 may alternatively determine, based on whether an area of the enrolled region reaches a preset value, whether there is a missing region in the enrolled region. That is, if the area of the enrolled region is greater than the preset value, the electronic device 10 determines that there is no missing region; or if the area of the enrolled region is less than the preset value, the electronic device 10 determines that there is a missing region.

If the electronic device 10 determines that there is a missing region, the electronic device 10 performs the following step S608.

If the electronic device 10 determines that there is no missing region, the electronic device 10 performs the following step S606.

S606: The electronic device 10 outputs a completion prompt, to prompt the user that fingerprint enrollment is completed.

After determining that there is no missing region, the electronic device 10 may output the completion prompt, where the completion prompt is used to prompt the user that fingerprint enrollment is completed.

The completion prompt may be any one or more manners of an animation, an image, a text, a voice, a vibration, indicator blinking, and the like. For example, the completion prompt may be texts "Enrollment is completed" and "Enrollment of the fingerprint 3 is completed" displayed in the text prompt region 302 in the embodiment shown in FIG. 2J or FIG. 3D. The completion prompt may further include a vibration of fixed duration (for example, 2 seconds), and the like. A specific manner of the completion prompt is not limited in this application.

S607: The electronic device 10 determines and stores a fingerprint template based on the collected fingerprint.

After enrollment is completed, the electronic device 10 may determine the fingerprint template based on the collected fingerprint, and the fingerprint template may include a master template. In some embodiments, the fingerprint template may also include a plurality of sub-templates. The master template is a template generated by the electronic device 10 based on a fingerprint spliced image formed by splicing a plurality of collected fingerprints, and the sub-template is a template generated by the electronic device 10 based on one of the collected fingerprints.

In some embodiments, if the fingerprint template includes the plurality of sub-templates, the electronic device 10 may determine the sub-template based on the collected fingerprint after collecting the fingerprint of the one or more regions of the finger. That is, the electronic device 10 may also generate a corresponding sub-template after each time of collection.

After the electronic device 10 disables the fingerprint enrollment mode, if the electronic device 10 detects that the finger of the user touches the fingerprint collection region, the electronic device 10 may collect the fingerprint, and determine whether the fingerprint matches the fingerprint template (for example, whether a similarity value between the collected fingerprint and a fingerprint of any region or any sub-template in the fingerprint template reaches a preset similarity value). If the fingerprint matches the fingerprint template, the electronic device 10 determines that this time of fingerprint identification succeeds; or if the fingerprint does not match the fingerprint template, the electronic device 10 determines that this time of fingerprint identification fails.

S608: The electronic device 10 outputs an enrollment prompt based on the enrolled region, where the enrollment prompt includes a missing region prompt and/or a movement direction prompt.

The enrollment prompt may be any one or more manners of an animation, an image, a text, a voice, a vibration, indicator blinking, and the like.

In some embodiments, the enrollment prompt includes the missing region prompt and/or the movement direction prompt. In some other embodiments, the missing region prompt may also be replaced with an enrolled region prompt.

The enrolled region prompt may be used to prompt the enrolled region of the finger. The missing region may prompt a missing region, namely, a non-enrolled region, of the finger. The movement direction prompt may be used to prompt the user of a movement direction of the finger in a next step. The user may determine the missing region based on the enrolled region prompt or the missing region prompt, to determine the next movement direction. The user may also determine the next movement direction based on the movement direction prompt.

After determining the missing region, the electronic device 10 may determine the movement direction in the next step based on the missing region, that is, determine the movement direction prompt. For example, if the electronic device 10 determines that the enrolled region includes a region of an upper half part of the finger, the electronic device 10 may determine that the missing region is a region of a lower half part of the finger, then determine that the movement direction in the next step is moving upward, and collect a fingerprint of the lower half part of the finger.

In some embodiments, the electronic device 10 may further determine a current contact region between the finger of the user and the fingerprint collection region based on a latest collected fingerprint, to obtain a more accurate movement direction of the finger of the user. In some embodiments, the electronic device 10 may also determine a movement route of the finger of the user for the fingerprint collection region based on the collection sequence of the fingerprint, and then determine the more accurate movement direction of the finger of the user.

For example, the enrolled region prompt or the missing region prompt may be the fingerprint 310a in the embodiment shown in FIG. 2G, the image 312 in the embodiment shown in FIG. 2H, the image 313 in the embodiment shown in FIG. 2I, or the like. For another example, the enrolled region prompt may also be the finger region image 320 and the region identifier 321a shown in FIG. 3A.

For example, the movement direction prompt may be the movement direction prompt 311c in the embodiment shown in FIG. 2I, or may be the image 330 in the embodiment shown in FIG. 4.

It may be understood that only several examples of the enrollment prompt are provided herein. In this embodiment of this application, the enrollment prompt may alternatively use a manner different from that in the foregoing embodiment. This is not limited in this application.

In some embodiments, the electronic device 10 may splice all collected fingerprints based on position information of the collected fingerprints, to obtain the fingerprint spliced image. A position of each fingerprint in the fingerprint spliced image is the same as a position of a region, of the finger, that corresponds to the fingerprint. For example, if the position information of the fingerprint A1 is that the fingerprint A1 is in the region 1, after fingerprint splicing, the fingerprint A1 is located in the region 1 of the fingerprint spliced image. For example, the fingerprint spliced image may be the image 312 shown in FIG. 2H, or may be the image 313 shown in FIG. 2I.

In some embodiments, if the electronic device 10 detects that an input of the user for the fingerprint collection region is a friction sliding operation, after determining that there is a missing region, the electronic device 10 may further detect whether the finger of the user leaves the fingerprint collection region. If the electronic device 10 determines that the finger leaves the fingerprint collection region, the electronic device 10 may further output an operation prompt 1, to prompt the user to perform the friction sliding operation with the finger in the fingerprint collection region again. If the electronic device 10 detects that the finger does not leave the fingerprint collection region, the electronic device 10 may further output an operation prompt 2, to prompt the user to continue to perform the friction sliding operation in the fingerprint collection region. The electronic device 10 may output the operation prompt (for example, the operation prompt 1 or the operation prompt 2) in one or more manners of an animation, an image, a voice, a text, a vibration, indicator blinking, and the like. An output manner of the operation prompt is not limited in this application.

After outputting the enrollment prompt, the electronic device 10 may perform step S603. After detecting the input operation of the user for the fingerprint collection region, the electronic device 10 collects a new fingerprint, and performs a step after step S603.

According to the foregoing fingerprint enrollment method, in a fingerprint enrollment process, the electronic device 10 may output an enrollment prompt in real time based on a collected fingerprint, to indicate a missing region of the user and/or a movement direction of the finger of the user. The user may move the finger based on the enrollment prompt, to avoid repeated collection of a fingerprint of a same region of the finger, reduce a quantity of collection times, increase an area of an actually collected fingerprint, and improve fingerprint collection efficiency.

In some embodiments, step S605 in the embodiment shown in FIG. 6 may also be replaced with the following step: The electronic device 10 determines, based on whether the collected fingerprint meets a preset condition, whether fingerprint enrollment ends. The preset condition may include any one or more of the following: the quantity of fingerprints collected by the electronic device 10 is greater than the preset quantity, the area of the enrolled region reaches the preset value, and so on. In the embodiment shown in FIG. 6, if the electronic device 10 determines that the preset condition is met, the electronic device 10 performs step S606, and outputs the completion prompt. If the electronic device 10 determines that the preset condition is not met, the electronic device 10 performs step S608, to output the enrollment prompt.

In a possible implementation, if the electronic device 10 detects that the user enrolls the fingerprint in a friction sliding enrollment manner, the electronic device 10 may not output the enrollment prompt in the fingerprint enrollment process.

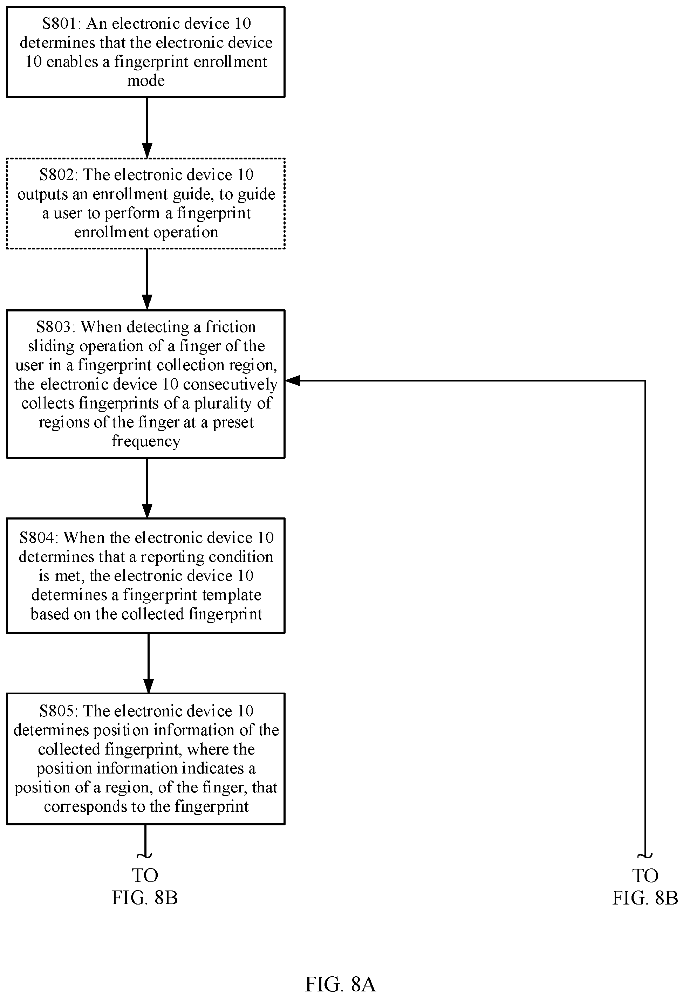

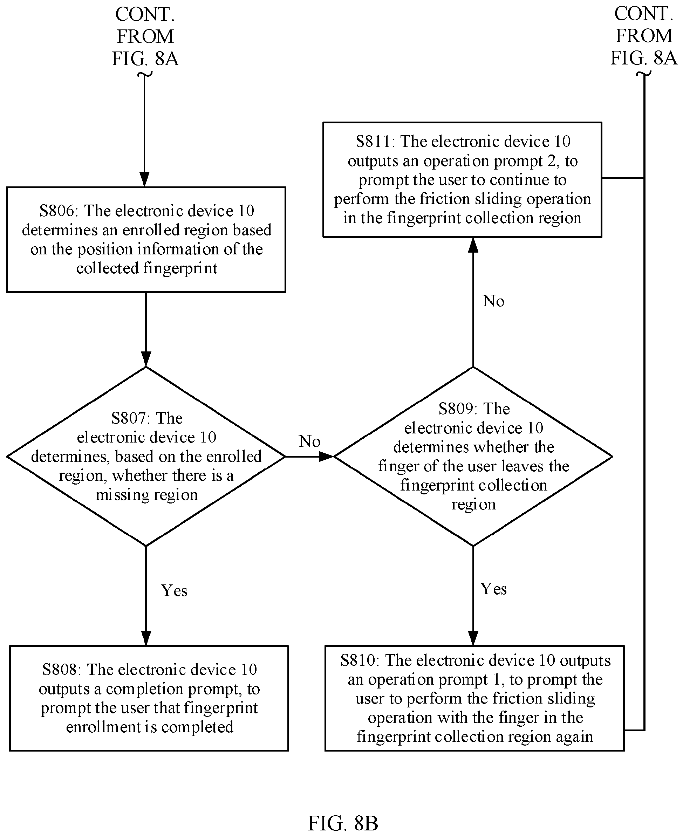

As shown in FIG. 8A and FIG. 8B, a specific procedure of the friction sliding fingerprint enrollment manner may include the following steps.

S801: The electronic device determines that the electronic device 10 enables a fingerprint enrollment mode.

S802: The electronic device 10 outputs an enrollment guide, to guide the user to perform a fingerprint enrollment operation.

Step S802 is an optional step.

S803: When detecting a friction sliding operation of a finger of the user for a fingerprint collection region, the electronic device 10 consecutively collects fingerprints of a plurality of regions of the finger at a preset frequency.

For specific content of step S801 to step S803, refer to related descriptions of step S601 to step S603 shown in FIG. 6. Details are not described herein again.

S804: When the electronic device determines that a reporting condition is met, the electronic device 10 determines a fingerprint template based on the collected fingerprint.

The reporting condition may include any one or more of the following: a quantity of newly collected fingerprints reaches a preset reporting quantity, duration of the friction sliding operation of the user for the fingerprint collection region reaches preset duration, the electronic device 10 detects that the finger of the user leaves the fingerprint collection region, and so on.

The fingerprint template may include a master template and a sub-template. The master template is a template generated by the electronic device 10 based on a fingerprint spliced image formed by splicing a plurality of collected fingerprints, and the sub-template is a template generated by the electronic device 10 based on one of the collected fingerprints. Each time after the reporting condition is met, the electronic device 10 may update the fingerprint template based on the collected fingerprint, that is, update the master template, and add one or more sub-templates.

In some embodiments, the electronic device 10 may alternatively determine the fingerprint template based on all collected fingerprints after fingerprint enrollment is completed. This is not limited in this application.

After the electronic device 10 disables the fingerprint enrollment mode, the electronic device 10 may perform fingerprint identification on the collected fingerprint, and determine whether the collected fingerprint matches the fingerprint template. When determining whether the fingerprint matches the fingerprint template, the electronic device 10 may first perform coarse matching based on the plurality of sub-templates and the collected fingerprint, that is, first determine whether a similarity value between the collected fingerprint and the sub-template reaches a preset similarity value. If the similarity value between the fingerprint and one of the plurality of sub-templates reaches the preset similarity value, that is, coarse matching succeeds, the electronic device 10 may output an identification result. If the similarity value between the fingerprint and any sub-template in the plurality of sub-templates is less than the preset similarity value, that is, coarse matching fails, the electronic device 10 may identify the collected fingerprint based on the master template, and determine an identification result.

In some embodiments, before determining the fingerprint template, the electronic device 10 may further preprocess a plurality of newly collected fingerprints, to delete a repeated fingerprint or delete a part of repeated fingerprints in the fingerprints. For a manner of determining whether the fingerprint is repeated, a manner of deleting the repeated fingerprint by the electronic device 10, and a manner of deleting the part of repeated fingerprints in the fingerprints by the electronic device 10, refer to related content in step S701 and step S702 shown in FIG. 7. Details are not described herein again.

S805: The electronic device 10 determines position information of the collected fingerprint, where the position information indicates a position of the region, of the finger, that corresponds to the fingerprint.

For specific content of the position information and a specific manner in which the electronic device 10 determines the position information of the fingerprint based on the collected fingerprint, refer to related content in step S704 shown in FIG. 7.

S806: The electronic device 10 determines the enrolled region based on the position information of the collected fingerprint.

S807: The electronic device 10 determines, based on the enrolled region, whether there is a missing region.

S808: The electronic device 10 outputs a completion prompt, to prompt the user that fingerprint enrollment is completed.

For specific content of step S806 to step S808, refer to related descriptions of step S604 to step S606 shown in FIG. 6. Details are not described herein again.

S809: The electronic device 10 determines whether the finger of the user leaves the fingerprint collection region.

The electronic device 10 may detect whether the finger of the user leaves the fingerprint collection region.

If the electronic device 10 detects that the finger of the user leaves the fingerprint collection region, the electronic device 10 may perform the following step S810; and when detecting that the finger of the user performs the friction sliding operation in the fingerprint collection region again, collect the fingerprints of the plurality of regions of the finger at the preset frequency.

If the electronic device 10 detects that the finger of the user does not leave the fingerprint collection region, the electronic device 10 may continue to collect the fingerprints of the plurality of regions of the finger at the preset frequency. In some embodiments, in this case, the electronic device 10 may perform the following step S811.

S810: The electronic device 10 outputs an operation prompt 1, to prompt the user to perform the friction sliding operation with the finger in the fingerprint collection region again.

The operation prompt 1 may be any one or more manners of an animation, an image, a text, a voice, a vibration, indicator blinking, and the like.

When the operation prompt 1 is output or after the operation prompt 1 is output, if the electronic device 10 detects the friction sliding operation of the finger of the user for the fingerprint collection region, the electronic device 10 may perform step S803 and subsequent steps, to collect the fingerprints of the plurality of regions of the finger at the preset frequency.

S811: The electronic device 10 outputs an operation prompt 2, to prompt the user to continue to perform the friction sliding operation in the fingerprint collection region.

The operation prompt 2 may be any one or more manners of an animation, an image, a text, a voice, a vibration, indicator blinking, and the like.

When the operation prompt 2 is output or after the operation prompt 1 is output, the electronic device 10 may perform step S803 and subsequent steps, to collect the fingerprints of the plurality of regions of the finger at the preset frequency.

According to the foregoing friction sliding fingerprint enrollment method, when detecting that the finger of the user frictionally slides in the fingerprint collection region, the electronic device 10 may collect the fingerprints of the plurality of regions of the finger at a fixed frequency, and the user does not need to frequently lift the finger from the fingerprint collection region. This reduces fingerprint collection time, and improves collection efficiency. In addition, because the finger of the user may randomly slide in the fingerprint collection region, an actual contact region between the finger and the fingerprint collection region is increased, so that the enrolled region of the finger can be increased, thereby increasing an actual area in which the electronic device 10 collects the fingerprint of the finger; and a miss probability of subsequent fingerprint identification can be reduced, thereby improving fingerprint identification efficiency.

It should be noted that, in this embodiment of this application, the fingerprint that is of the finger of the user and that is collected by the electronic device 10 may also be referred to as fingerprint information, for example, first fingerprint information, second fingerprint information, or third fingerprint information. The electronic device 10 may determine the enrolled region based on the collected fingerprint information, for example, determine a first enrollment region based on the first fingerprint information, and determine a second enrollment region based on the second fingerprint information. The enrollment prompt output by the electronic device 10 may be a first enrollment prompt, a second enrollment prompt, or the like. A first fingerprint image drawn by the electronic device 10 based on the first fingerprint information may be the fingerprint spliced image formed by the electronic device 10 by splicing the collected fingerprints.

The following describes an interaction diagram of software modules in a process of performing a fingerprint enrollment method by the electronic device 10 according to an embodiment of this application.

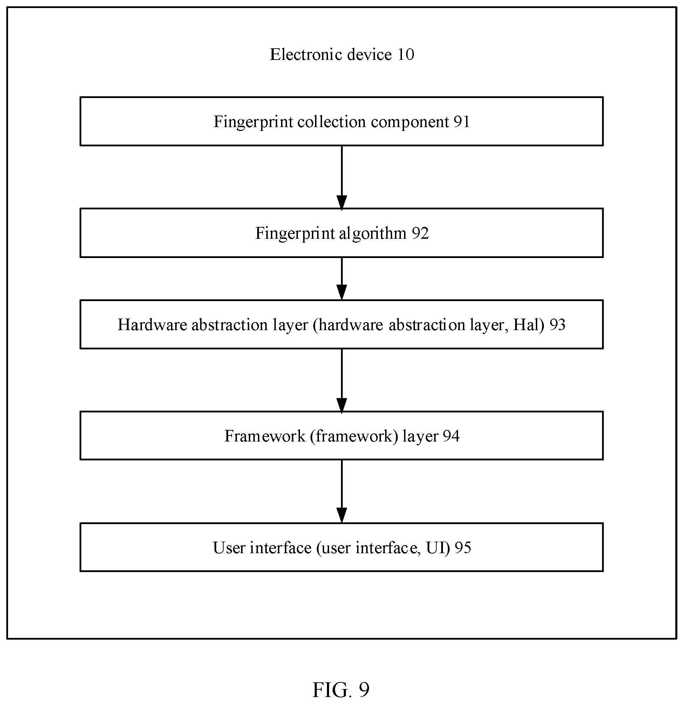

As shown in FIG. 9, the electronic device 10 may include a fingerprint collection component 91, a fingerprint algorithm 92, a hardware abstraction layer (hardware abstraction layer, Hal) 93, a framework (framework) layer 94, and a user interface (user interface, UI) 95.

The fingerprint collection component 91 may collect a fingerprint of a part of regions of the finger of the user when detecting the input (for example, the touch operation or the friction sliding operation) of the user for the fingerprint collection region. After the fingerprint is collected, the fingerprint collection component 91 may send collected one or more fingerprints to the fingerprint algorithm 92.

The fingerprint algorithm 92 may determine an enrolled region of the finger of the user based on the collected fingerprint, and determine whether the enrolled region meets a preset condition (for example, whether there is no missing region, an area of the enrolled region reaches a preset value, or a quantity of collected fingerprints reaches a preset quantity). When the enrolled region does not meet the preset condition, the fingerprint algorithm 92 may send the enrolled region to the Hal layer. When the enrolled region meets the preset condition, the fingerprint algorithm 92 may send a completion instruction to the Hal layer. In some embodiments, the fingerprint algorithm 92 may also splice the collected fingerprints into the fingerprint spliced image, and send the fingerprint spliced image to the Hal layer. In some other embodiments, the fingerprint algorithm 92 may also determine a determining result of the fingerprint, where the determining result indicates whether the fingerprint is repeated (that is, whether a similarity value between the fingerprint and any previously collected fingerprint is less than a preset value), and send the determining result to the Hal layer.

The Hal layer may receive content (for example, the enrolled region, the completion instruction, the fingerprint spliced image, or the determining result) sent by the fingerprint algorithm 92, and send the content to the framework layer 94.

The framework layer 94 may receive the content (for example, the enrolled region, the completion instruction, the fingerprint spliced image, or the determining result) sent by the Hal layer, and send the content to the user interface (user interface, UI) 95.

The UI 95 may determine, based on the enrolled region, to output an enrollment prompt, where the enrollment prompt may include a missing region prompt and/or a movement direction prompt. Alternatively, the UI 95 may output a completion prompt based on the completion instruction, where the completion prompt is used to prompt the user that fingerprint enrollment is completed. The UI 95 may further output the fingerprint spliced image. In some embodiments, if the UI 95 determines, based on the determining result, that the currently collected fingerprint is repeated, the UI 95 may further output a repeat prompt, where the repeat prompt is used to prompt the user that the currently collected fingerprint is repeated with a previously collected fingerprint.

The following describes functional modules of an electronic device 10 provided in an embodiment of this application.

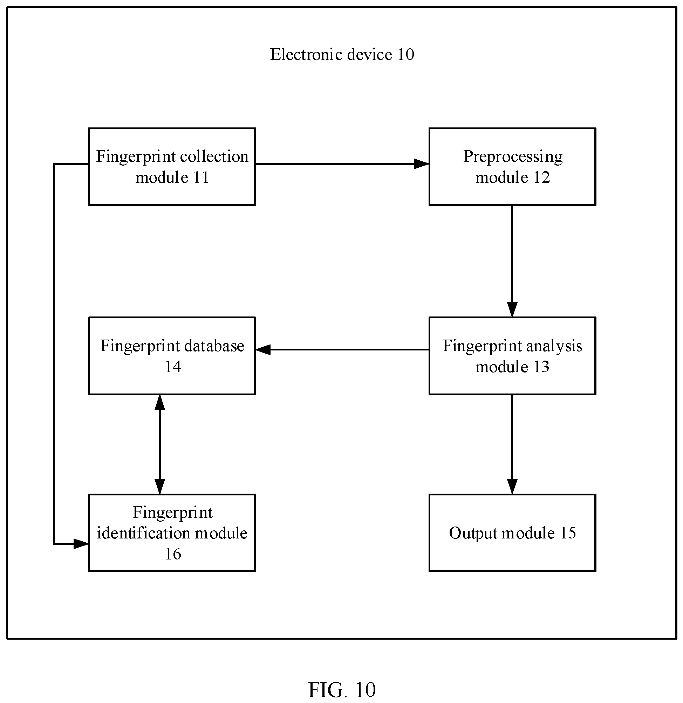

As shown in FIG. 10, the electronic device 10 may include a fingerprint collection module 11, a preprocessing module 12, a fingerprint analysis module 13, a fingerprint database 14, an output module 15, and a fingerprint identification module 16.

The fingerprint collection module 11 may collect fingerprints of a plurality of regions of a finger. When the electronic device 10 enables a fingerprint enrollment mode, the fingerprint collection module 11 may send one or more collected fingerprints to the preprocessing module 12. When the electronic device 10 does not enable the fingerprint enrollment mode, the fingerprint collection module 11 may send the collected fingerprint to the fingerprint identification module 16.

The preprocessing module 12 may determine whether the collected fingerprint is repeated, that is, may calculate a similarity value between any collected fingerprint and another fingerprint, and determine whether the similarity value reaches a preset similarity value. After determining that a newly collected fingerprint is not repeated with any previously collected fingerprint, the preprocessing module 12 may further send the newly collected fingerprint to the fingerprint analysis module 13. In some embodiments, after determining that the newly collected fingerprint is repeated with the previously collected fingerprint, the preprocessing module 12 may further delete the newly collected fingerprint, or delete a part of repeated fingerprint in the newly collected fingerprint.

The fingerprint analysis module 13 may receive the fingerprint sent by the preprocessing module 12, and determine position information of each fingerprint, where the position information indicates a position of the fingerprint of the finger. The fingerprint analysis module 13 may further determine, based on the received one or more fingerprints, the enrolled region, determine whether there is a missing region, and determine, based on whether there is the missing region, to output an enrollment prompt or a completion prompt. Specifically, if there is no missing region, the fingerprint analysis module 13 determines the completion prompt, and sends the completion prompt to the output module 15. If there is the missing region, the fingerprint analysis module 13 determines the enrollment prompt, and sends the enrollment prompt to the output module 15. The fingerprint analysis module 13 may further determine a movement direction in a next step based on the enrolled region.

In some embodiments, the fingerprint analysis module 13 may further perform splicing based on all received fingerprints and position information, to obtain a fingerprint spliced image, and generate a master template in a fingerprint template based on the fingerprint spliced image. In some embodiments, the fingerprint analysis module 13 may also generate a sub-template in the fingerprint template based on any received fingerprint. After fingerprint enrollment is completed, the fingerprint analysis module 13 may further send the fingerprint template to the fingerprint database 14.

The fingerprint database 14 may store the fingerprint template. The fingerprint database 14 may receive the fingerprint template sent by the fingerprint analysis module 13, where the fingerprint template may include the master template. In some embodiments, the fingerprint template may also include a plurality of sub-templates.

The output module 15 may receive the enrollment prompt sent by the fingerprint analysis module 13, and output the enrollment prompt. The output module 15 may also receive the completion prompt sent by the fingerprint analysis module 13, and output the completion prompt. In some embodiments, the output module 15 may also output a repeat prompt, or may output an operation prompt (for example, an operation prompt 1 or an operation prompt 2), or the like. For specific content and an output manner of prompts such as the enrollment prompt, the completion prompt, the repeat prompt, and the operation prompt, refer to related descriptions in the foregoing embodiments.

When the electronic device 10 does not enable the fingerprint enrollment mode, the fingerprint identification module 16 may receive the fingerprint collected by the fingerprint collection module 11, and determine an identification result of the newly collected fingerprint based on the fingerprint template obtained from the fingerprint database 14.

It may be understood that the embodiment shown in FIG. 10 is merely an example. In this embodiment of this application, the electronic device 10 may include more or fewer modules than those in the embodiment shown in FIG. 10, or may include modules different from those in the embodiment shown in FIG. 10. This is not limited herein in this application.

The implementations of this application may be randomly combined, to achieve different technical effect.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A fingerprint enrollment method, comprising:
receiving, by an electronic device, first fingerprint information of a user;
determining, by the electronic device, a first enrollment region based on the first fingerprint information, wherein the first enrollment region comprises a region corresponding to the first fingerprint information;
outputting, by the electronic device, a first enrollment prompt based on the first enrollment region, wherein the first enrollment prompt is used to prompt the user to input second fingerprint information;
receiving, by the electronic device, the second fingerprint information of the user;
determining, by the electronic device, a second enrollment region based on the second fingerprint information, wherein the second enrollment region comprises the first enrollment region and a region corresponding to the second fingerprint information; and
outputting, by the electronic device, a second enrollment prompt based on the second enrollment region, wherein the second enrollment prompt is used to prompt the user to input third fingerprint information, wherein
the first fingerprint information is different from the second fingerprint information, and the first enrollment prompt is different from the second enrollment prompt.

2. The method according to claim 1, wherein the outputting, by the electronic device, a first enrollment prompt based on the first enrollment region specifically comprises:
when the electronic device determines that an area of the first enrollment region is less than a preset value, outputting, by the electronic device, the first enrollment prompt; and
the outputting, by the electronic device, a second enrollment prompt based on the second enrollment region specifically comprises:
when the electronic device determines that the area of the first enrollment region is less than the preset value, outputting, by the electronic device, the second enrollment prompt.

3. The method according to claim 2, wherein the method further comprises:
receiving, by the electronic device, the third fingerprint information of the user;
determining, by the electronic device, a third enrollment region based on the third fingerprint information, wherein the third enrollment region comprises the second enrollment region and a region corresponding to the third fingerprint information; and
when the electronic device determines that an area of the third enrollment region is greater than the preset value, outputting, by the electronic device, a completion prompt, wherein the completion prompt is used to prompt the user that fingerprint enrollment is completed, wherein
the third fingerprint information is different from the first fingerprint information, and is different from the second fingerprint information.

4. The method according to any one of claims 1 to 3, wherein the receiving, by an electronic device, first fingerprint information of a user specifically comprises:
receiving, by the electronic device, a touch operation of a finger of the user for a fingerprint collection region on the electronic device, and collecting, by the electronic device, the first fingerprint information of the user in response to the touch operation; or
receiving, by the electronic device, a friction sliding operation of a finger of the user for the fingerprint collection region, and collecting, by the electronic device, the first fingerprint information of the user in response to the friction sliding operation.

5. The method according to claim 4, wherein the fingerprint collection region is a side fingerprint button or an under-screen fingerprint collection region.

6. The method according to any one of claims 1 to 5, wherein the first enrollment prompt comprises a first fingerprint image drawn by the electronic device based on the first fingerprint information.

7. The method according to any one of claims 1 to 5, wherein the first enrollment prompt comprises the first enrollment region.

8. The method according to any one of claims 1 to 5, wherein the first enrollment prompt comprises a movement direction of the finger relative to the fingerprint collection region, and the movement direction is used to guide the user to input the second fingerprint information.

9. An electronic device, comprising one or more processors and one or more memories, wherein the one or more memories are coupled to the one or more processors, the one or more memories are configured to store computer program code, and the computer program code comprises computer instructions; and when the one or more processors execute the computer instructions, the electronic device is enabled to perform the method according to any one of claims 1 to 8.

10. A computer-readable storage medium, comprising computer instructions, wherein when the computer instructions are run on an electronic device, the electronic device is enabled to perform the method according to any one of claims 1 to 8.
